# EUROPEAN PATENT SPECIFICATION

(11) **EP 3 053 990 B1**
(45) Date of publication and mention of the grant of the patent: **10.04.2019**
(21) Application number: 16154903.5
(22) Date of filing: 09.02.2016
(51) Int. Cl.: G02F 1/1337, C09K 19/30, C09K 19/12, C09K 19/54, C09K 19/04, C09K 19/34

(54) **LIQUID CRYSTAL COMPOSITION AND LIQUID CRYSTAL DISPLAY INCLUDING THE SAME**
FLÜSSIGKRISTALLZUSAMMENSETZUNG UND FLÜSSIGKRISTALLANZEIGEVORRICHTUNG DAMIT
ENSEMBLE DE PANNEAU À CRISTAUX LIQUIDES ET APPAREIL D'AFFICHAGE À CRISTAUX LIQUIDES DOTÉ DE CELUI-CI

(30) Priority: 09.02.2015 KR 20150019566
(43) Date of publication of application: 10.08.2016
(73) Proprietor: Samsung Display Co., Ltd., Gyeonggi-do 17113 (KR)
(72) Inventor: BAE, Ji Hong, Gyeonggi-do (KR); KIM, Kyung Min, Seoul (KR); JANG, Hye Lim, Gyeonggi-do (KR); OH, Keun Chan, Chungcheongnam-do (KR)
(74) Representative: Mounteney, Simon James

(56) References cited:
- EP-A2- 2 514 800
- EP-A2- 2 722 380
- EP-A2- 2 722 381
- WO-A1-2012/076104
- WO-A1-2013/182271
- DE-A1-102011 119 144
- DE-A1-102012 008 570

## Description

### BACKGROUND

### (a) Field

The present disclosure relates to a liquid crystal composition, and a liquid crystal display including the same.

### (b) Description of the Related Art

A liquid crystal display is currently one of the most used flat panel displays, and is configured with two sheets of display panels facing each other, a liquid crystal layer provided therebetween, and a field generating electrode such as a pixel electrode or a common electrode provided on at least one of the display panels.

The liquid crystal display applies a voltage to the field generating electrode to generate an electric field on the liquid crystal layer, determines the alignment of liquid crystal molecules provided in the liquid crystal layer, and controls the transmittance of light passing through the liquid crystal layer.

A liquid crystal composition used in the liquid crystal display achieves a desired image by controlling the transmittance of light. In particular, with variation of use of liquid crystal displays, various characteristics such as low-voltage driving, a high voltage holding ratio (VHR), a wide viewing angle, a wide operation temperature range, and high-speed response are desired.

Research related to improvements in the physical properties of the liquid crystal composition such as rotation viscosity, refractive index, and an elastic coefficient of the liquid crystal composition, has been performed.

WO 2012/076104 A1 relates to a liquid crystal medium comprising a nematic phase and a negative dielectric anisotropy.

EP 2 722 380 A2 relates to compounds for use in a liquid crystal medium.

DE 10 2012 008570 A1 relates to substituted piperidine compounds for use in a liquid crystal medium.

EP 2 514 800 A2 relates to substituted piperidine compounds for use in a liquid crystal medium.

### SUMMARY

In order to obtain high-speed response characteristics of a liquid crystal composition including a liquid crystal compound including an alkenyl group and the like, a reliability problem such as a linear afterimage may occur. The present disclosure provides a liquid crystal composition having high-rate response characteristics and improved reliability. Liquid crystal displays including the liquid crystal composition are also provided.

In an aspect, the present disclosure provides a liquid crystal composition including: liquid crystal molecules including at least one of a liquid crystal compound having an alkenyl group and a liquid crystal compound having an alkoxy group; and a first stabilizer including a compound having a structure represented by Formula 1-1: 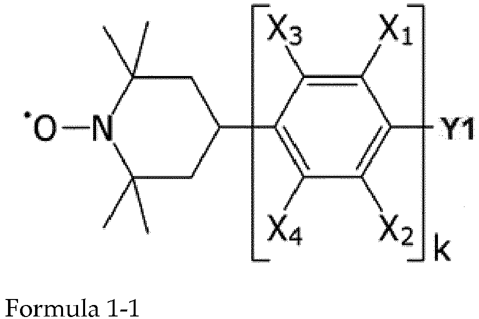 wherein X₁, X₂, X₃, and X₄ are each independently hydrogen or halogen; wherein Y1 is =O, when k is 0, or Y1 is a C1 to C10 alkoxy group, a hydroxyl group, -NHCOCH₃, or =O when k is 1.

In an embodiment, the liquid crystal molecules include at least one of a first compound to an eleventh compound, where the first compound to the eleventh compound are represented by Formula 5-1 to Formula 5-11, respectively: 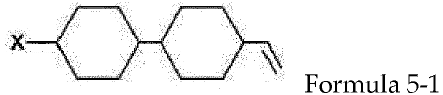 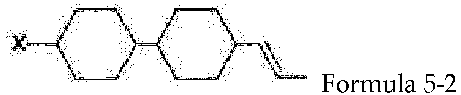 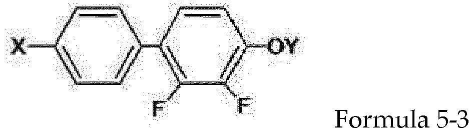 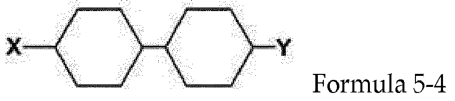 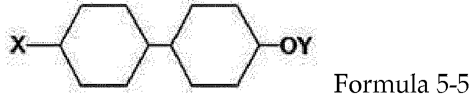 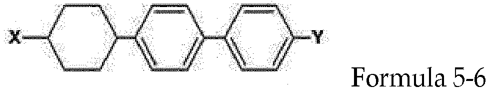 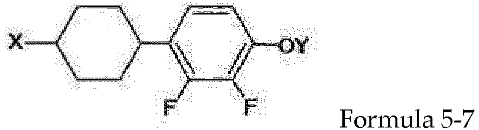 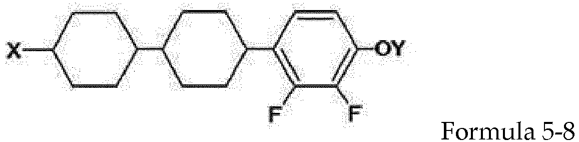 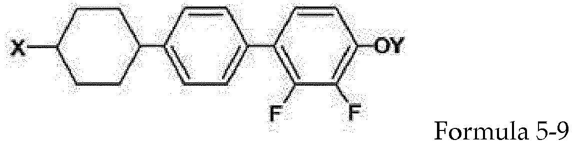 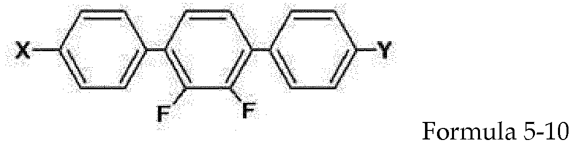 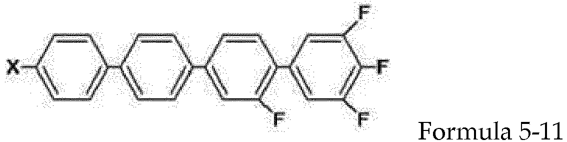 where X is an alkyl group or an alkoxy group, and Y is an alkyl group, an alkenyl group, or an alkoxy group.

In an embodiment, the liquid crystal molecules include the first compound (Formula 5-1), the second compound (Formula 5-2), the seventh compound (Formula 5-7), the eighth compound (Formula 5-8), the ninth compound (Formula 5-9), the tenth compound (Formula 5-10), and the eleventh compound (Formula 5-11).

In another embodiment, the liquid crystal molecules include the first compound (Formula 5-1), the second compound (Formula 5-2), the fourth compound (Formula 5-4), the seventh compound (Formula 5-7), the eighth compound (Formula 5-8), the ninth compound (Formula 5-9), the tenth compound (Formula 5-10), and the eleventh compound (Formula 5-11).

In yet another embodiment, the liquid crystal molecules include the first compound (Formula 5-1), the third compound (Formula 5-3), the fourth compound (Formula 5-4), the fifth compound (Formula 5-5), the sixth compound (Formula 5-6), the seventh compound (Formula 5-7), the eighth compound (Formula 5-8), the ninth compound (Formula 5-9), and the eleventh compound (Formula 5-11).

In an embodiment, the liquid crystal molecules include the first compound(Formula 5-1), the third compound (Formula 5-3), the sixth compound (Formula 5-6), the seventh compound (Formula 5-7), the eighth compound (Formula 5-8), the ninth compound (Formula 5-9), and the eleventh compound (Formula 5-11).

In an embodiment, the liquid crystal molecules include a reactive mesogen.

In another aspect, the present disclosure provides a liquid crystal display including: a first substrate; a second substrate facing the first substrate; and a liquid crystal layer disposed between the first substrate and the second substrate. The liquid crystal layer includes liquid crystal molecules including at least one of a liquid crystal compound having an alkenyl group and a liquid crystal compound having an alkoxy group, and a first stabilizer including a compound having a structure represented by Formula 1-1: 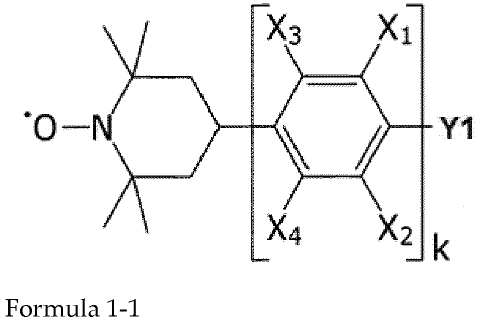 wherein X₁, X₂, X₃, and X₄ are each independently hydrogen or halogen; wherein Y1 is =O, when k is 0, or Y1 is a C1 to C10 alkoxy group, a hydroxyl group, -NHCOCH₃, or =O when k is 1.

In an embodiment, the liquid crystal layer further includes an aligning polymer.

Also disclosed herein is a method for manufacturing a liquid crystal display, including: generating a field generating electrode on at least one of a first substrate and a second substrate, where the second substrate faces the first substrate; forming a liquid crystal layer between the first substrate and the second substrate, in which the liquid crystal layer includes liquid crystal molecules, an alignment aid and a first stabilizer; and forming an aligning polymer by irradiating ultraviolet light while applying an electric field to the liquid crystal layer; where the liquid crystal molecules include at least one of a liquid crystal compound having an alkenyl group and a liquid crystal compound having an alkoxy group, and where the first stabilizer includes a compound having a structure represented by Formula 1: 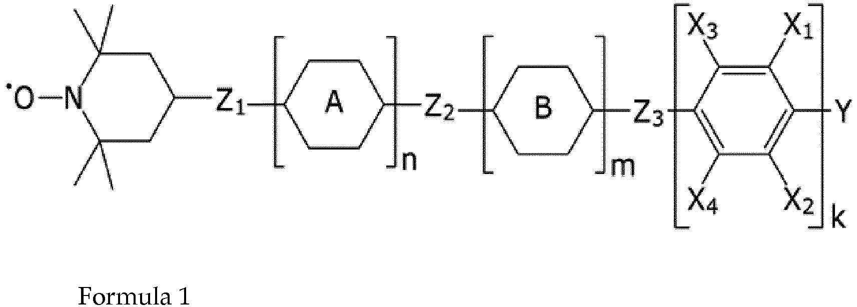 where n is 0 or 1, m is 0 or 1, k is 0 or 1; Z₁, Z₂, and Z₃ are each independently a single bond, -C=C-, -OCO-, -COO-, -CF₂O-, or a C1 to C5 alkylene group; X₁, X₂, X₃, and X₄ are each independently hydrogen or halogen; Y is hydrogen, a C1 to C10 alkoxy group, a hydroxyl group, -NHCOCH₃, or =O; and A and B are cyclic compounds.

The method may further include exposing to fluorescent light while an electric field is not applied to the liquid crystal layer.

At least some of the above and other features of the invention are set out in the claims.

According to the embodiments of the present disclosure, improvement of the afterimage may be increased when the liquid crystal composition and the liquid crystal display including the same are formed using the stabilizer or mixture of stabilizers.

### BRIEF DESCRIPTION OF THE DRAWINGS

The above and other aspects, advantages and features of this disclosure will become more apparent by describing in further detail embodiments thereof with reference to the accompanying drawings, in which:
FIG. 1 is an equivalent circuit diagram of a pixel of an embodiment of the liquid crystal display of the present disclosure.
FIG. 2 is a plan view of an embodiment of a liquid crystal display according to the present disclosure.
FIG. 3 is a cross-sectional view along line III-III of FIG. 2.
FIG. 4 is a graph illustrating the voltage holding ratio (VHR, %) according to UV irradiated energy (Joules) for Comparative Examples 1 and 2 and Embodiments 1 and 2.
FIG. 5 is a series of photographs of the line afterimage and surface afterimage for Comparative Examples 1 and 2 and Embodiments 1 and 2.
FIG. 6 is a graph illustrating the voltage holding ratio versus the amount of stabilizer (ppm) added as measured when a thermal or electrical stress is applied for 0, 24, 168 or 336 hours.
FIG. 7 is a graph illustrating the voltage holding ratio versus the amount of stabilizer added when a backlight stress is applied for 0, 24, 168 or 336 hours.
FIG. 8 is a plan view of an embodiment of a liquid crystal display according to the present disclosure.
FIG. 9 is a cross-sectional view along line IX-IX of FIG. 8.
FIG. 10 is an equivalent circuit diagram of a pixel of the liquid crystal display shown in FIG. 8.
FIG. 11 is an equivalent circuit diagram of a pixel of an embodiment of a liquid crystal display according to the present disclosure.

### DETAILED DESCRIPTION OF THE EMBODIMENTS

The invention will now be described more fully hereinafter with reference to the accompanying drawings, in which various embodiments are shown. This invention may, however, be embodied in many different forms, and should not be construed as limited to the embodiments set forth herein. Rather, these embodiments are provided so that this disclosure will be thorough and complete, and will fully convey the scope of the invention to those skilled in the art. Like reference numerals refer to like elements throughout.

It will be understood that when an element is referred to as being "on" another element, it can be directly on the other element or intervening elements may be present therebetween. In contrast, when an element is referred to as being "directly on" another element, there are no intervening elements present.

It will be understood that, although the terms "first," "second," "third" etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, "a first element," "component," "region," "layer" or "section" discussed below could be termed a second element, component, region, layer or section without departing from the teachings herein.

The terminology used herein is for the purpose of describing particular embodiments only and is not intended to be limiting. As used herein, the singular forms "a," "an," and "the" are intended to include the plural forms, including "at least one," unless the content clearly indicates otherwise. "Or" means "and/or." As used herein, the term "and/or" includes any and all combinations of one or more of the associated listed items. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Furthermore, relative terms, such as "lower" or "bottom" and "upper" or "top," may be used herein to describe one element's relationship to another element as illustrated in the Figures. It will be understood that relative terms are intended to encompass different orientations of the device in addition to the orientation depicted in the Figures. For example, if the device in one of the figures is turned over, elements described as being on the "lower" side of other elements would then be oriented on "upper" sides of the other elements. The term "lower," can therefore, encompasses both an orientation of "lower" and "upper," depending on the particular orientation of the figure. Similarly, if the device in one of the figures is turned over, elements described as "below" or "beneath" other elements would then be oriented "above" the other elements. The terms "below" or "beneath" can, therefore, encompass both an orientation of above and below.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within ± 30%, 20%, 10%, 5% of the stated value.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Embodiments are described herein with reference to cross section illustrations that are schematic illustrations of embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

In an aspect, a liquid crystal composition according to the present disclosure includes liquid crystal molecules including at least one of a liquid crystal compound including an alkenyl group and a liquid crystal compound including an alkoxy group, and a first stabilizer.

In an embodiment, the liquid crystal molecules include at least one of a compound represented by general Formula 5. 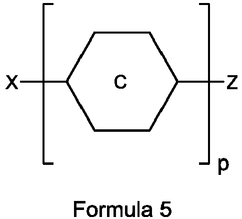 In general Formula 5:
each C is independently an aryl group or a saturated or unsaturated 6-membered cycloalkyl;
X is an alkyl group (e.g. a C1 to C10 alkyl group) or an alkoxy group (e.g. a C1 to C10 alkoxy group);
Z is F or OF', wherein F is an alkyl group (e.g. a C1 to C10 alkyl group), an alkenyl group (e.g. a C2 to C10 alkenyl group), an alkoxy group (e.g. a C1 to C10 alkoxy group) or a halogen, and F' is an alkyl group (e.g. a C1 to C10 alkyl group), an alkenyl group (e.g. a C2 to C10 alkenyl group), or an alkoxy group (e.g. a C1 to C10 alkoxy group); and
p is 2 to 4.

When C is an aryl group, it may be substituted with one or more halogens (e.g. fluorine).

In an embodiment, each C in general Formula 5 is independently

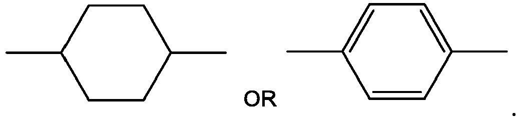

In an embodiment, the liquid crystal molecules may include at least one of a first compound to an eleventh compound. The first compound to the eleventh compound are represented by Formula 5-1 to Formula 5-11, respectively.
First compound: 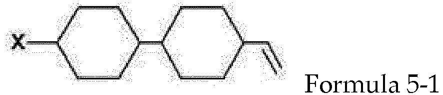
Second compound: 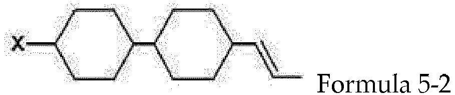
Third compound: 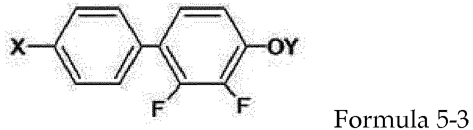
Fourth compound: 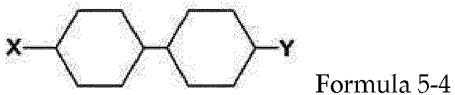
Fifth compound: 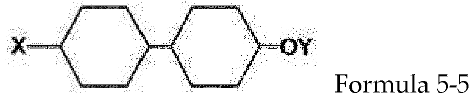
Sixth compound: 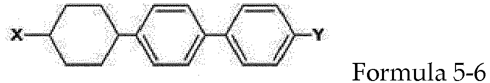
Seventh compound: 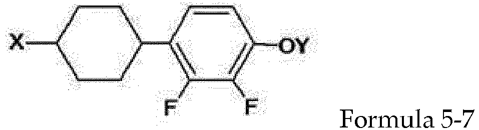
Eighth compound: 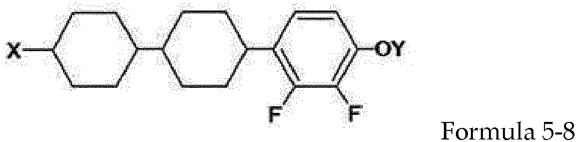
Ninth compound: 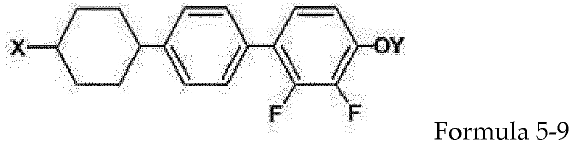
Tenth compound: 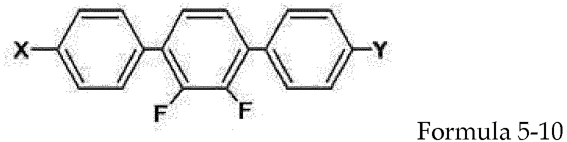
Eleventh compound:

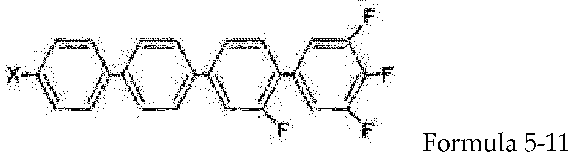

Regarding Formula 5-1 to Formula 5-11, X is an alkyl group (e.g. a C1 to C10 alkyl group) or an alkoxy group (e.g. a C1 to C10 alkoxy group), and Y is an alkyl group (e.g. a C1 to C10 alkyl group), an alkenyl group (e.g. a C2 to C10 alkenyl group), or an alkoxy group (e.g. a C1 to C10 alkoxy group).

In detail, the liquid crystal composition may include the first compound (Formula 5-1), the second compound (Formula 5-2), the seventh compound (Formula 5-7), the eighth compound (Formula 5-8), the ninth compound (Formula 5-9), the tenth compound (Formula 5-10), and the eleventh compound (Formula 5-11).

Alternatively, the liquid crystal composition may include the first compound (Formula 5-1), the second compound (Formula 5-2), the fourth compound (Formula 5-4), the seventh compound (Formula 5-7), the eighth compound (Formula 5-8), the ninth compound (Formula 5-9), the tenth compound (Formula 5-10), and the eleventh compound (Formula 5-11).

As a further alternative, the liquid crystal composition may include the first compound (Formula 5-1), the third compound (Formula 5-3), the fourth compound (Formula 5-4), the fifth compound (Formula 5-5), the sixth compound (Formula 5-6), the seventh compound (Formula 5-7), the eighth compound (Formula 5-8), the ninth compound (Formula 5-9), and the eleventh compound (Formula 5-11).

As a still further alternative, the liquid crystal composition may include the first compound (Formula 5-1), the third compound (Formula 5-3), the sixth compound (Formula 5-6), the seventh compound (Formula 5-7), the eighth compound (Formula 5-8), the ninth compound (Formula 5-9), and the eleventh compound (Formula 5-11).

The first stabilizer includes a compound having a structure represented by Formula 1-1.

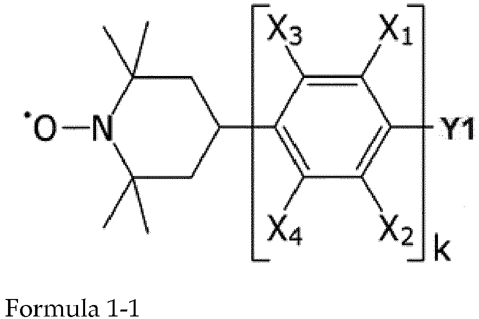

Regarding Formula 1-1, X₁, X₂, X₃, and X₄ are each independently hydrogen or halogen; wherein Y1 is =O, when k is 0, or Y1 is a C1 to C10 alkoxy group, a hydroxyl group, -NHCOCH₃, or =O when k is 1.

The liquid crystal composition may be used for the liquid crystal display, and it may include an alkenyl-based liquid crystal compound with low viscosity in order to improve the response speed of the liquid crystal display. However, the alkenyl-based liquid crystal compound may deteriorate reliability since an alkenyl by-product and a line afterimage are generated by heat and ultraviolet ("UV") rays. Previously, a second stabilizer such as the one expressed in Formula 2, was used in an attempt to improve the afterimage, but the effect on improving reliability was insufficient.

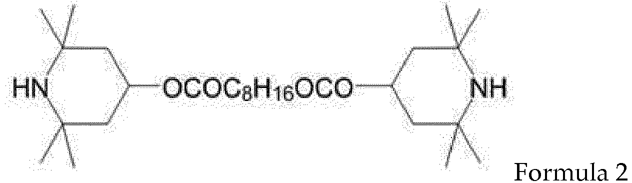

It was advantageously discovered that the afterimage improving effect may be maximized by using an N-oxyl radical stabilizer as expressed in Formula 1-1 as a new stabilizer.

The first stabilizer includes at least one compound represented by Formula 1-1.

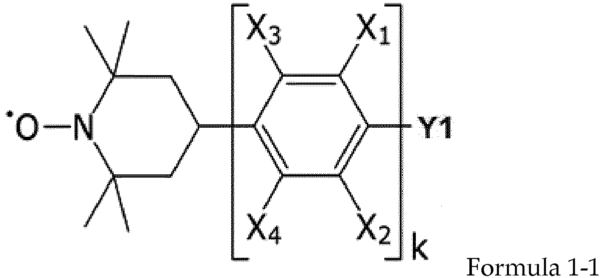

Regarding Formula 1-1, X₁, X₂, X₃, and X₄ are each independently hydrogen or halogen; wherein Y1 is =O, when k is 0, or Y1 is a C1 to C10 alkoxy group, a hydroxyl group, -NHCOCH₃, or =O when k is 1.

Examples of Formula 1-1 may include as below:

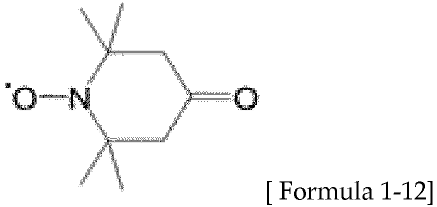

In an embodiment, the liquid crystal composition includes the first stabilizer in an amount from about 10 ppm to about 1000 ppm (e.g. from about 10 ppm to about 900 ppm, from about 10 ppm to about 800 ppm, from about 10 ppm to about 700 ppm, from about 10 ppm to about 600 ppm, from about 10 ppm to about 500 ppm, from about 30 ppm to about 500 ppm, from about 30 ppm to about 400 ppm, from about 40 ppm to about 350 ppm, from about 45 ppm to about 350 ppm, or from about 50 ppm to about 300 ppm). For example, the liquid crystal composition includes the first stabilizer in an amount of about 50 ppm, about 100 ppm or about 300 ppm.

To maximize the afterimage improving effect, at least one of a second stabilizer and a third stabilizer may be further included. In an embodiment, the second stabilizer includes a compound having a structure represented by Formula 2 below, and the third stabilizer includes a compound having a structure represented by Formula 3 below.

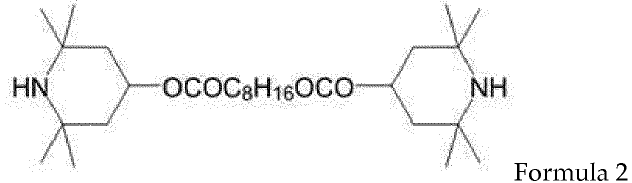

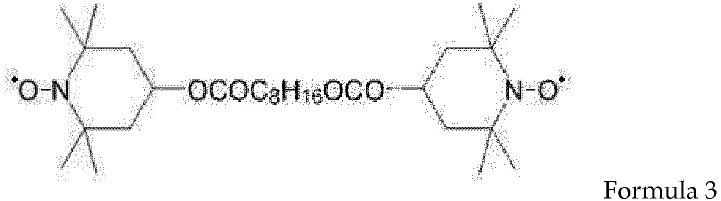

Additionally, the liquid crystal display may further include an antioxidant. In an embodiment, the antioxidant includes a compound having the structure represented by Formula 4.

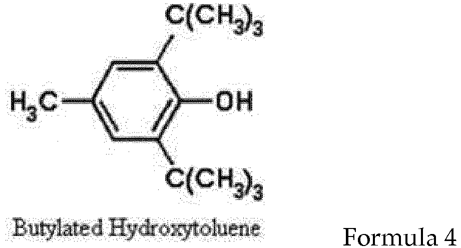

However, the antioxidant is not restricted to the compound expressed in the Formula 4, and may be at least one of an alkylated monophenol, alkyl thiomethylphenol, hydroquinone, alkylated hydroquinone, tocopherol, hydroxylated thiodiphenyl ether, alkylidene bisphenol, an O-, N-, and S-benzyl compound, hydroxyl benzylated malonate, an aromatic hydroxyl benzyl compound, benzylphosphonate, acylaminophenol, a monohydric or polyhydric alcohol, a monohydric or polyhydric alcohol and β-(3,5-di-tertbutyl-4-hydroxyphenyl)-propionic acid esters, a monohydric or polyhydric alcohol and β-(5-tertbutyl-4-hydroxy-3-methylphenyl)-propionic acid esters, a monohydric or polyhydric alcohol and β-(3,5-dicyclohexyl-4-hydroxyphenyl)-propionic acid esters, a monohydric or polyhydric alcohol and 3,5-di-tertbutyl-4-hydroxyphenyl acetic acid esters, β-(3,5-di-tertbutyl-4-hydroxyphenyl) propionic acid amides, ascorbic acid, and an amine antioxidant.

A liquid crystal display formed by use of the above-described liquid crystal composition will now be described.

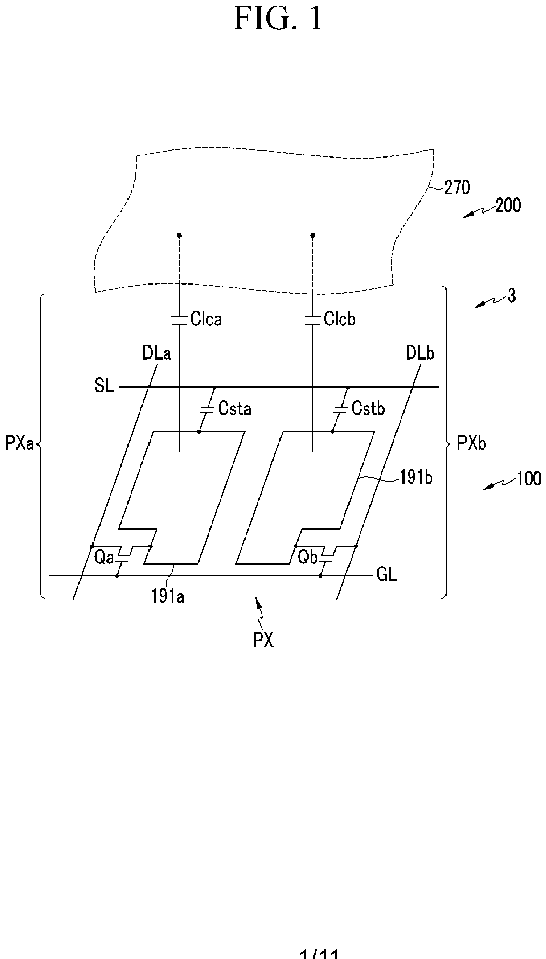

FIG. 1 is an equivalent circuit diagram of one pixel PX area of an embodiment of the liquid crystal display according to the present disclosure.

Referring to FIGS. 1, 2, and 3, the liquid crystal display includes a thin film transistor array panel 100 and a common electrode panel 200 facing each other, and a liquid crystal layer 3 provided therebetween.

Referring to FIG. 1, the liquid crystal display includes signal lines including a plurality of gate lines (GL), pairs of data lines (DLa and DLb), and storage electrode lines (SL), and a plurality of pixels PX connected thereto.

The pixel PX includes a pair of subpixels (PXa and PXb) including switching elements (Qa and Qb), liquid crystal capacitors (Clca and Clcb), and storage capacitors (Csta and Cstb).

The switching elements (Qa and Qb) are three-terminal elements, such as thin film transistors, provided on the lower panel 100, and they include control terminals connected to the gate lines (GL), input terminals connected to the data lines (DLa and DLb), and output terminals connected to the liquid crystal capacitors (Clca and Clcb) and the storage capacitors (Csta and Cstb), respectively.

The liquid crystal capacitors (Clca and Clcb) are formed by having the sub-pixel electrodes 191a and 191b and the common electrode 270 as two terminals, and the liquid crystal layer 3 positioned between the two terminals as a dielectric material.

The storage capacitors (Csta and Cstb) for supporting the liquid crystal capacitors (Clca and Clcb) are formed when the storage electrode lines (SL) provided on the lower panel 100 overlap the sub-pixel electrodes 191a and 191b with an insulator therebetween, and the storage electrode lines (SL) receive a predetermined voltage such as a common voltage ("Vcom").

Voltages charged in the liquid crystal capacitors (Clca and Clcb) have a slight difference. For example, a data voltage applied to the liquid crystal capacitor (Clca) is set to be always greater or less than a data voltage applied to the neighboring liquid crystal capacitor (Clcb). When the voltages at the liquid crystal capacitors (Clca and Clcb) are appropriately controlled, an image seen from a lateral side may approach an image seen from a front side thereby improving the lateral visibility of the liquid crystal display.

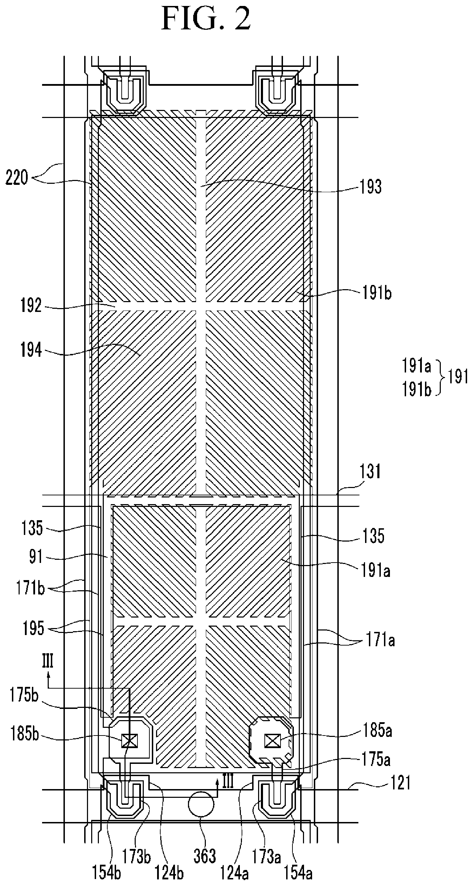

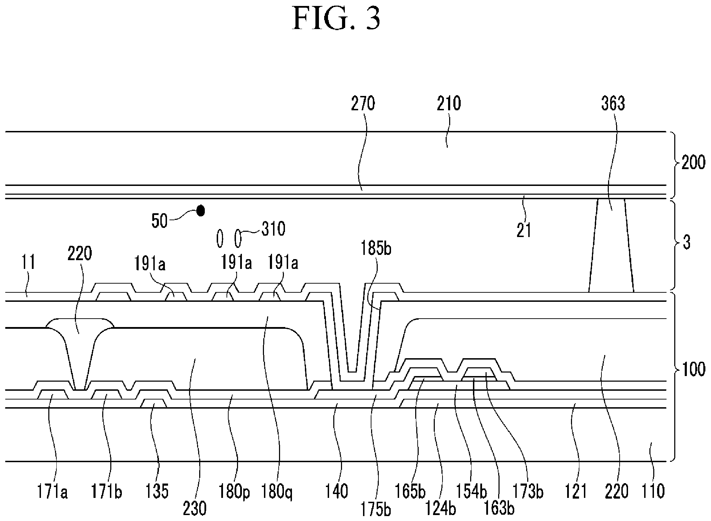

FIG. 2 is a plan view of an embodiment of a liquid crystal display according to the present disclosure. FIG. 3 is a cross-sectional view along line III-III of FIG. 2. FIG. 2 and FIG. 3 show a configuration of the equivalent circuit diagram of FIG. 1.

Referring to FIG. 2 and FIG. 3, the liquid crystal display includes a lower panel 100 and an upper panel 200 facing each other, and a liquid crystal layer 3 provided between the display panels 100 and 200.

The lower panel 100 will now be described.

A plurality of gate lines 121 and storage electrode lines 131 and 135 are disposed on an insulation substrate 110.

The gate lines 121 transmit gate signals and mainly extend in a horizontal direction. The gate line 121 include a plurality of first and second gate electrodes 124a and 124b, respectively, protruded upward.

The storage electrode line includes a stem line 131 extending substantially in parallel to the gate lines 121, and a plurality of storage electrodes 135 extending therefrom. Forms and dispositions of the storage electrode lines 131 and 135 are variable in many ways.

The gate lines 121 and the storage electrode lines 131 and 135 may be made of at least one of an aluminium-based metal such as aluminium (Al) and an aluminium alloy, a silver-based metal such as silver (Ag) and a silver alloy, and a copper-based metal such as copper (Cu) and a copper alloy.

The gate lines 121 and the gate electrodes 124a and 124b are formed by a single film, but are not limited thereto and may be formed in a dual-film or triple-film pattern.

When the gate lines 121 and the gate electrodes 124a and 124b have a dual-film (bilayer) structure, they may be formed by a lower film and an upper film. The lower film may be formed of at least one material selected from molybdenum (Mo), a molybdenum alloy, chromium (Cr), a chromium alloy, titanium (Ti), a titanium alloy, tantalum (Ta), a tantalum alloy, manganese (Mn), and a manganese alloy. The upper film may be made of at least one material selected from an aluminium-based metal such as aluminium (Al) and an aluminium alloy, a silver-based metal such as silver (Ag) and a silver alloy, and a copper-based metal such as copper (Cu) and a copper alloy. Alternatively, the structure may be a triple-film (trilayer) structure. In the case of a triple-film structure, films having different physical properties may be combined to form the triple-film.

A gate insulating layer 140 is disposed on the gate lines 121 and the storage electrode lines 131 and 135, and a plurality of semiconductor layers 154a and 154b made of amorphous silicon or crystalline silicon are formed on the gate insulating layer 140.

A plurality of pairs of ohmic contacts 163b and 165b is disposed on the semiconductor layers 154a and 154b, and they may be made of a material such as n+ hydrogenated amorphous silicon in which an n-type impurity is doped with a high concentration, or of a silicide.

A plurality of pairs of data lines 171a and 171b and a plurality of pairs of first and second drain electrodes 175a and 175b are disposed on the ohmic contacts 163b and 165b and the gate insulating layer 140

The data lines 171a and 171b transmit a data signal and mainly extend in a perpendicular direction to the gate line 121 and the storage electrode line 131 of the storage electrode line. The data lines 171a and 171b include first and second source electrodes 173a and 173b extended toward the first and second gate electrodes 124a and 124b and bent in a U shape, and the first and second source electrodes 173a and 173b face the first and second drain electrodes 175a and 175b with respect to the first and second gate electrodes 124a and 124b.

The data lines 171a and 171b may be made of at least one material selected from an aluminium-based metal such as aluminium (Al) and an aluminium alloy, a silver-based metal such as silver (Ag) and a silver alloy, and a copper-based metal such as copper (Cu) and a copper alloy. In an embodiment, the data lines 171a and 171b are formed of a single layer film however, they are not restricted thereto. In alternative embodiments, the data lines 171a and 171b may be formed as a dual-film or triple-film structure.

The first and second drain electrodes 175a and 175b extend upward from one end partly surrounded by the first and second source electrodes 173a and 173b, and another end may be large enough to access another layer.

However, the shapes and dispositions of the data lines 171a and 171b in addition to the first and second drain electrodes 175a and 175b are modifiable in many ways.

The first and second gate electrodes 124a and 124b, the first and second source electrodes 173a and 173b, and the first and second drain electrodes 175a and 175b form the first and second thin film transistors (Qa and Qb) together with the first and second semiconductor layers 154a and 154b. Channels of the first and second thin film transistors (Qa and Qb) are formed on the first and second semiconductor layers 154a and 154b between the first and second source electrodes 173a and 173b and the first and second drain electrodes 175a and 175b.

The ohmic contacts 163b and 165b are provided between the semiconductor layers 154a and 154b provided below them and the data lines 171a and 171b and the drain electrodes 175a and 175b provided above them and reduce contact resistance therebetween. Portions that are exposed and are not covered by the data lines 171a and 171b and the drain electrodes 175a and 175b are provided between the source electrodes 173a and 173b and the drain electrodes 175a and 175b on the semiconductor layers 154a and 154b.

A lower passivation layer 180p made of a silicon nitride or a silicon oxide is formed on the data lines 171a and 171b, the drain electrodes 175a and 175b, and the exposed semiconductor layers 154a and 154b.

A color filter 230 is disposed on the lower passivation layer 180p. The color filter 230 may include color filters of red, green, and blue. A light blocking member 220 made of a single layer or dual layers of chromium and a chromium oxide, or an organic material, is disposed between color filters adjacent to each other among the color filters. The light blocking member 220 may have an opening arranged in a matrix form.

An upper passivation layer 180q made of a transparent organic insulating material, is disposed on the color filter 230 and the light blocking member 220. The upper passivation layer 180q prevents exposure of the color filter 230 and provides a flat surface. A plurality of contact holes 185a and 185b for exposing first and second drain electrodes 175a and 175b are formed in the upper passivation layer 180q.

A plurality of pixel electrodes 191 is disposed on the upper passivation layer 180q. The pixel electrode 191 may be made of a transparent conductive material such as indium tin oxide ("ITO") or indium zinc oxide ("IZO"), or a reflective metal such as aluminum, silver, chromium, or an alloy thereof.

The pixel electrode 191 includes first and second sub-pixel electrodes 191a and 191b separated from each other. The first and second sub-pixel electrodes 191a and 191b, respectively include a horizontal stem 192 and a perpendicular stem 193 crossing the same which together form a cross-shaped stem, and a fine branch 194 extending from the horizontal stem 192 and the perpendicular stem 193 in an oblique manner.

The upper panel 200 will now be described.

A common electrode 270 is disposed between an insulation substrate 210 and an alignment layer 21. The common electrode 270 is formed on an entire surface of the insulation substrate 210, which is transparent.

A spacer 363 for maintaining a space between the upper panel 200 and the lower panel 100 is formed.

Alignment layers 11 and 21 are applied to the inner sides of the lower panel 100 and the upper panel 200, respectively, and they may be perpendicular alignment layers or photoalignment layers. The alignment layers 11 and 21 may be formed of at least one material generally used as the liquid crystal alignment layer, such as for example, a polyamic acid or a polyimide. When the alignment layers 11 and 21 are formed by photoalignment layers, the reliability of the liquid crystal molecules 310 in the liquid crystal layer 3 may be worsened due to the photoirradiation process used for photoalignment. However, the liquid crystal displays of the present disclosure include the first stabilizer, and as a result, the reliability of the liquid crystals may be increased by improving the afterimage.

A polarizer (not shown) may be provided on outer sides of the lower panel 100 and the upper panel 200.

A liquid crystal layer 3 is provided between the lower panel 100 and the upper panel 200. The liquid crystal layer 3 includes a plurality of liquid crystal molecules 310 and an aligning polymer 50. The aligning polymer may help the initial alignment of liquid crystal molecules 310 when an electric field is applied to improve the response speed. The aligning polymer 50 may be generated by polymerizing an alignment aid by irradiation of the alignment aid with ultraviolet ("UV") rays. In an embodiment, the alignment aid may be a reactive mesogen.

The reactive mesogen may be a compound expressed in Formulae RM-1 to RM-6, and it is not restricted thereto.

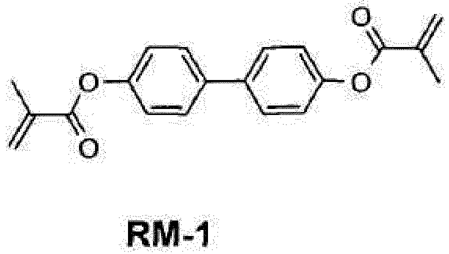

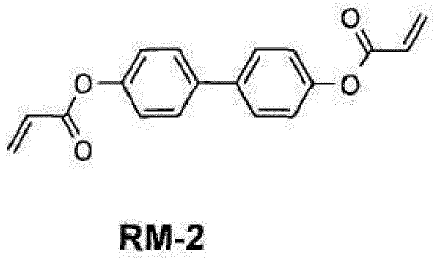

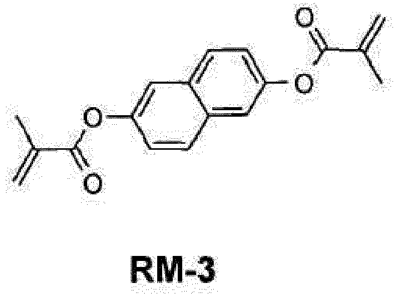

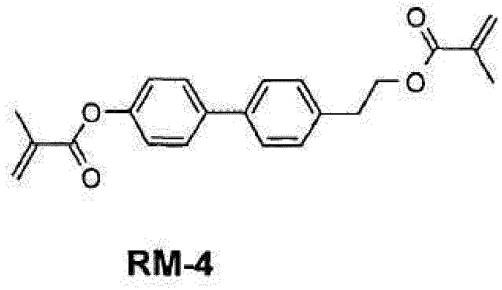

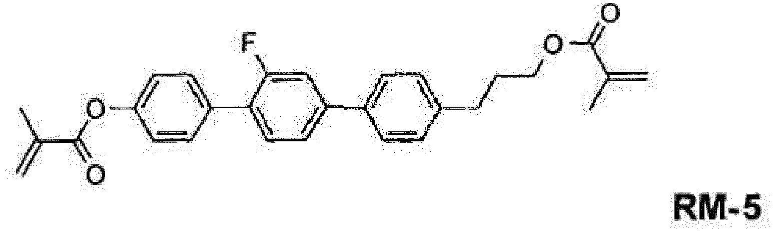

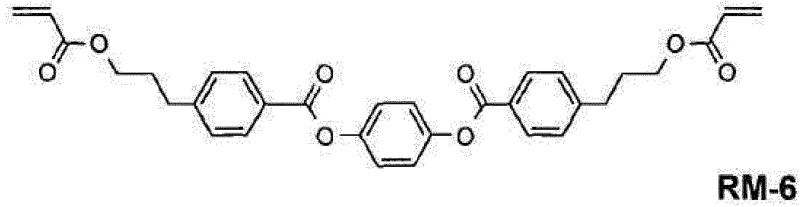

An electric field exposing process may be performed to form the aligning polymer 50, and a fluorescent exposure process may be performed to remove unpolymerized alignment aid remaining on the liquid crystal layer 3. In this instance, the fluorescent exposure process may be performed while no electric field is applied.

In an embodiment, the liquid crystal layer 3 may include liquid crystal molecules 310 including at least one of a liquid crystal compound including an alkenyl group and a liquid crystal compound including an alkoxy group, and a first stabilizer (not shown). The above-described contents of the liquid crystal composition may be applicable to the liquid crystal molecules 310 and the first stabilizer, respectively.

An alkenyl-based liquid crystal single compound with low viscosity may be used to improve the response speed of the liquid crystal display. However, when the electric field exposure process and the fluorescent exposure process are performed to form the aligning polymer 50, an alkenyl by-product or an alkoxy by-product is detected and linear afterimage occurs, so reliability may be deteriorated.

In embodiments, the afterimage improving effect may be maximized by using the N-oxyl radical stabilizer having a structure represented by Formula 1-1 as a stabilizer.

To maximize the afterimage improving effect, at least one of a second stabilizer having a structure represented by Formula 2 below and a third stabilizer having a structure represented in Formula 3 below, may be further included in the liquid crystal composition.

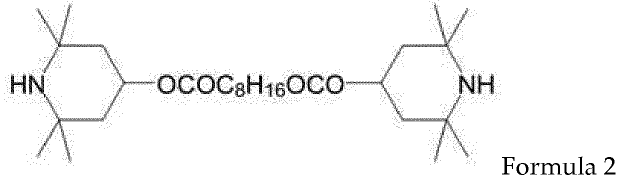

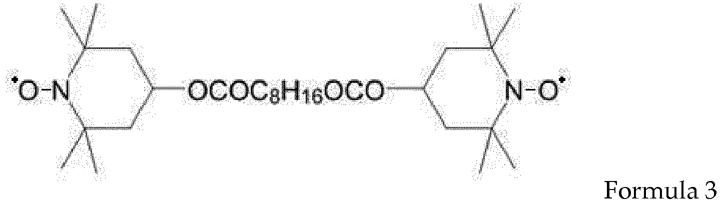

The liquid crystal display may further include an antioxidant. The alkenyl by-product or the alkoxy by-product may be generated by heat used during the sealing process for bonding the lower panel 100 and the upper panel 200. The addition of an antioxidant may prevent deterioration of reliability resulting from application of the heat.

In an embodiment, the antioxidant has a structure represented by Formula 4.

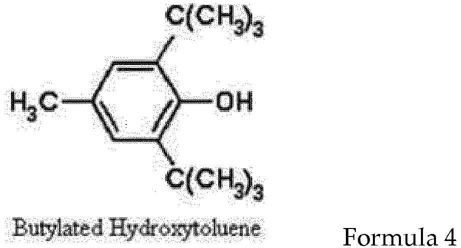

However, the antioxidant is not restricted to the compound expressed in the Formula 4, and may be at least one of an alkylated monophenol, alkyl thiomethylphenol, hydroquinone and alkylated hydroquinone, tocopherol, hydroxylated thiodiphenyl ether, alkylidene bisphenol, an O-, N-, and S-benzyl compound, hydroxyl benzylated malonate, an aromatic hydroxyl benzyl compound, benzylphosphonate, acylaminophenol, a monohydric or polyhydric alcohol, a monohydric or polyhydric alcohol and β-(3,5-di-tertbutyl-4-hydroxyphenyl)-propionic acid esters, a monohydric or polyhydric alcohol and β-(5-tertbutyl-4-hydroxy-3-methylphenyl)-propionic acid esters, a monohydric or polyhydric alcohol and β-(3,5-dicyclohexyl-4-hydroxyphenyl)-propionic acid esters, a monohydric or polyhydric alcohol and 3,5-di-tertbutyl-4-hydroxyphenyl acetic acid esters, β-(3,5-di-tertbutyl-4-hydroxyphenyl) propionic acid amides, ascorbic acid, and an amine antioxidant.

The liquid crystal molecules 310 may have negative dielectric anisotropy, and their long axes may be aligned to be substantially perpendicular to surfaces of the display panels 100 and 200 when no electric field is applied.

When a voltage is applied to the pixel electrode 191 and the common electrode 270, the long axes of the liquid crystal molecules 310 are aligned to be perpendicular to the direction of an electric field that is generated between the pixel electrode 191 and the common electrode 270. A change in the degree of polarization of the light incident to the liquid crystal layer 3 is variable by an inclined degree of the liquid crystal molecules 310, and the change in polarization causes the change of transmittance by the polarizer, by which the liquid crystal display displays the image.

The direction in which the liquid crystal molecules 310 are inclined is determined by the fine branches 194 of the pixel electrode 191. That is, the liquid crystal molecules 310 are inclined in parallel to a length direction of the fine branches 194. The length direction of the fine branches 194 of one pixel electrode 191 includes four different sub-areas, so the liquid crystal molecules 310 are inclined in four directions, and four domains with different alignment directions of the liquid crystal molecule 310 are formed on the liquid crystal layer 3. A viewing angle of the liquid crystal display may be improved by varying the direction in which the liquid crystal molecules are inclined.

Regarding the liquid crystal display, the aligning polymer 50, formed by polymerization of the alignment aid, may control the initial alignment direction (pre-tilt) of the liquid crystal molecules 310. The response speed may therefore be substantially improved by manufacturing a liquid crystal composition with less viscosity, and the reliability may be improved as measured by improvement of afterimage, by use of the first stabilizer.

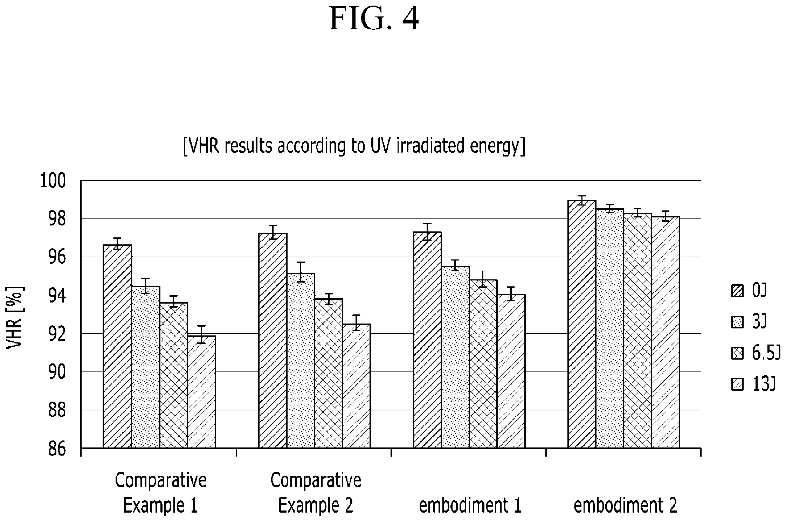

The reliability-improving effect of an embodiment of a liquid crystal display according the present disclosure, will now be described with reference to FIG. 4 to FIG. 7.

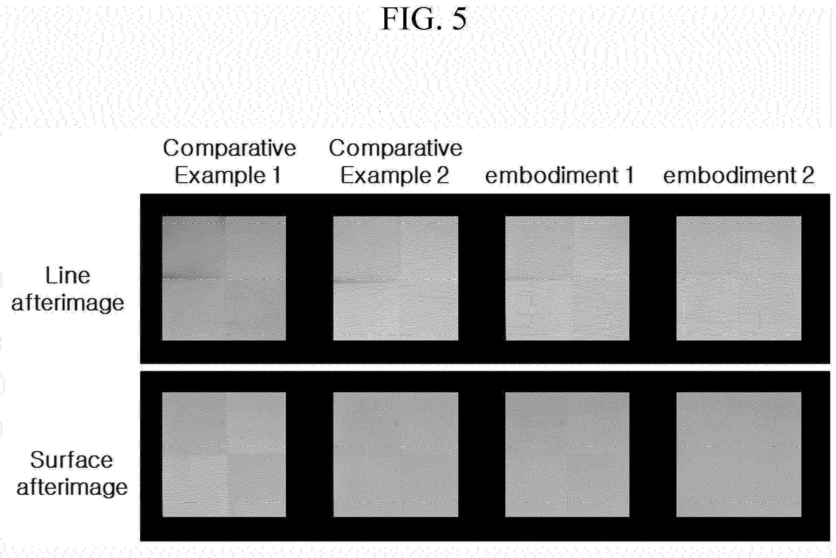

FIG. 4 is a graph illustrating the voltage holding ratio (VHR) according to UV irradiated energy for Comparative Examples 1 and 2 and Embodiments 1 and 2. FIG. 5 is a series of photographs of the line afterimage and the surface afterimage for Comparative Examples 1 and 2 and Embodiments 1 and 2.

Referring to FIG. 4 and FIG. 5, Comparative Example 1 is a case in which the liquid crystal composition includes no stabilizer, Comparative Example 2 is a case in which the liquid crystal composition includes a second stabilizer, Embodiment 1 is a case in which the liquid crystal composition includes a first stabilizer, and Embodiment 2 is a case in which the liquid crystal composition includes a first stabilizer and a second stabilizer or a first stabilizer and a third stabilizer.

The first stabilizer includes at least one compound represented by Formula 1-12.

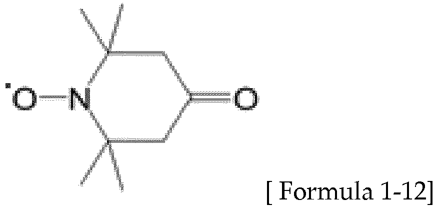

The second stabilizer includes a compound having a structure represented by Formula 2 below.

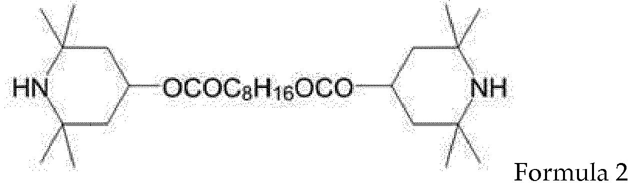

The third stabilizer includes a compound having a structure represented by Formula 3 below.

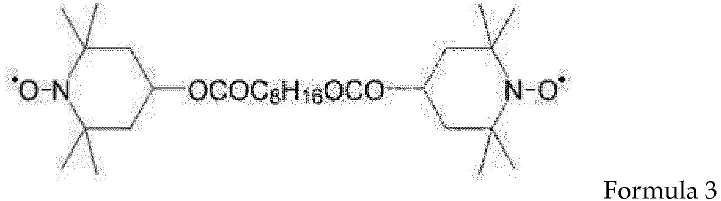

Referring to FIG. 4, Comparative Example 2, in which the second stabilizer is added to the liquid crystal composition similar to the prior art, shows an improved voltage holding ratio (VHR) as compared to the Comparative Example 1 in which no stabilizer is added thereto. Embodiment 1, in which the first stabilizer is added to the liquid crystal composition and Embodiment 2, in which the first stabilizer and either the second stabilizer or the third stabilizer are added thereto, further improve the voltage holding ratio as compared to Comparative Examples 1 and 2.

Referring to FIG. 5, it was found that the linear afterimage and the surface afterimage are improved in the Embodiments 1 and 2 as compared to the Comparative Examples 1 and 2.

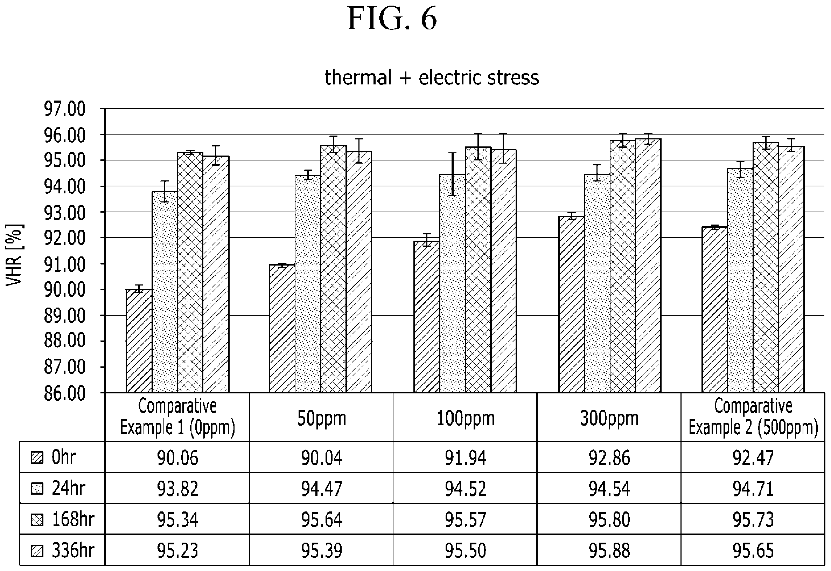

FIG. 6 is a graph illustrating the voltage holding ratio versus the amount of stabilizer added, measured when a thermal and electrical stress was applied to the liquid crystal layer for 0, 24, 168 or 336 hours. The thermal stress (heat) corresponds to 60 degrees Celsius (°C) and the electrical stress corresponds to 1 direct current (DC) volt, applied to the liquid crystal layer.

Referring to FIG. 6, Comparative Example 1 is a case in which the liquid crystal composition includes no stabilizer (0 ppm), the Comparative Example 2 is a case in which the liquid crystal composition includes 500 ppm of the antioxidant having the structure of Formula 4, and the other Examples are cases in which the liquid crystal composition includes 50 ppm, 100 ppm, and 300 ppm of the first stabilizer.

Referring to FIG. 6, the voltage holding ratio tends to increase according to the stress-applied hours (0 h, 24 h, 168 h, and 336 h), and the voltage holding ratio is improved as the content of the first stabilizer increases. Particularly, the case in which the content of the first stabilizer is 300 ppm shows a voltage holding ratio improving effect as compared to the Comparative Example 2 (500 ppm of the antioxidant having the structure of Formula 4).

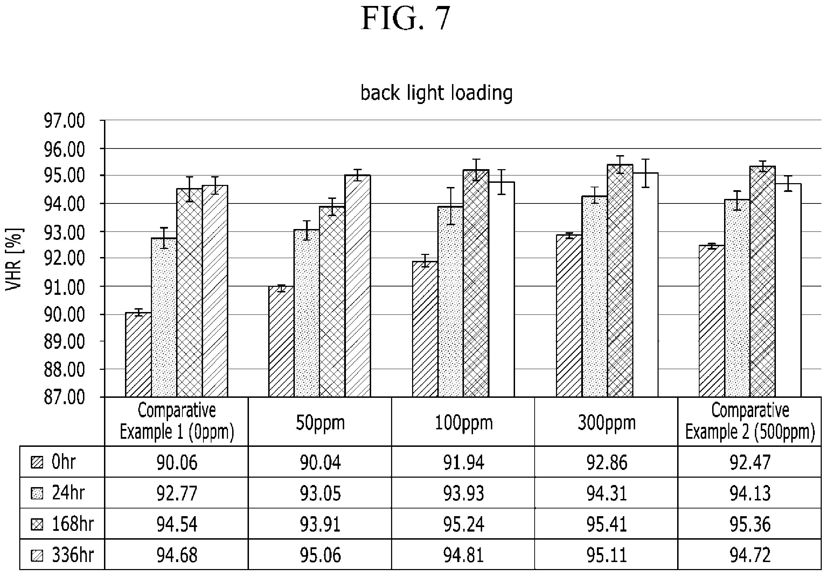

FIG. 7 is a graph illustrating the voltage holding ratio according versus the amount of stabilizer added when a backlight stress was applied for 0, 24, 168 or 336 hours. The backlight stress includes stresses caused by heat and light.

Referring to FIG. 7, the Comparative Example 1 is a case in which the liquid crystal composition includes no stabilizer (0 ppm), the Comparative Example 2 is a case in which the liquid crystal composition includes 500 ppm of the antioxidant having the structure of Formula 4, and the others are cases in which the liquid crystal composition includes 50 ppm, 100 ppm, or 300 ppm of the first stabilizer.

Referring to FIG. 7, in a similar manner of the experimental example of FIG. 6, the voltage holding ratio tends to increase according to the stress-applied hours (0 h, 24 h, 168 h, and 336 h) and the voltage holding ratio is improved when the content of the first stabilizer is increased. Particularly, the case in which the content of the first stabilizer is 300 ppm shows a voltage holding ratio improving effect as compared to the Comparative Example 2 (500 ppm of the antioxidant having the structure of Formula 4).

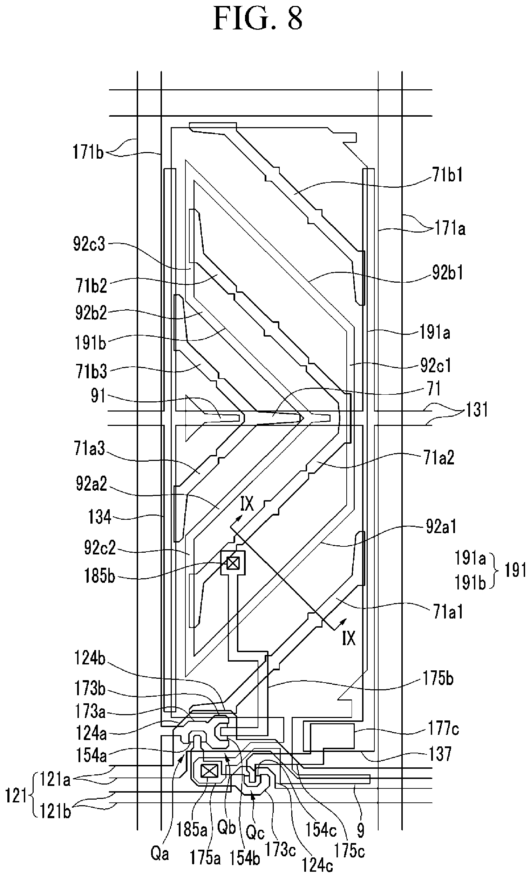

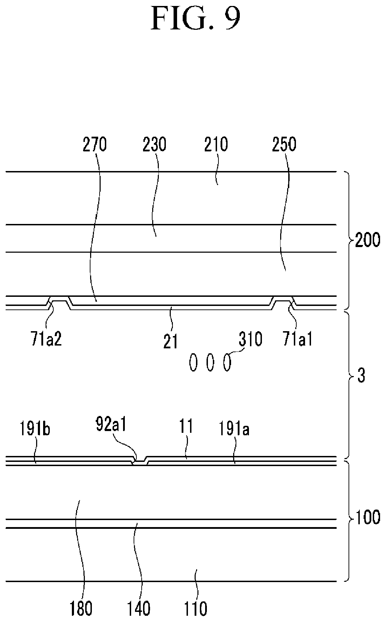

FIG. 8 is a plan view of an embodiment of a liquid crystal display according to the present disclosure. FIG. 9 is a cross-sectional view along line IX-IX of FIG. 8.

The lower panel 100 will now be described.

A plurality of gate lines 121 including a first gate line 121a and a second gate line 121b and a plurality of storage electrode lines 131 are disposed on an insulation substrate 110.

The first gate line 121a and the second gate line 121b mainly extend in the horizontal direction and transmit the gate signal. The first gate line 121a includes a first gate electrode 124a and a second gate electrode 124b protruded upward, and the second gate line 121b includes a third gate electrode 124c. The first gate electrode 124a and the second gate electrode 124b are connected to each other to form a protrusion.

The storage electrode line 131 mainly extends in the horizontal direction and transmits a predetermined voltage such as a common voltage (Vcom). The storage electrode line 131 includes a pair of perpendicular units 134 substantially extending to be perpendicular to the gate line 121, and a capacitance electrode 137 protruded from the perpendicular units 134 and expanded.

A gate insulating layer 140 is disposed on the gate line 121 and the storage electrode line 131, and a plurality of semiconductor stripe layers (not shown) made of amorphous silicon or crystalline silicon are formed on the gate insulating layer 140. The semiconductor stripe layers include first and second semiconductor layers 154a and 154b mainly extending in the perpendicular direction, extending toward the first and second gate electrodes 124a and 124b, and connected to each other, and a third semiconductor layer 154c provided on the third gate electrode 124c.

A plurality of pairs of ohmic contacts (not shown) is disposed on the semiconductor layers 154a, 154b, and 154c. The ohmic contacts may be made of a material such as an n+ hydrogenated amorphous silicon in which an n-type impurity is doped at a high concentration, or of a silicide.

A data conductor including a plurality of data lines 171a and 171b, first drain electrodes 175a, second drain electrodes 175b, and third drain electrodes 175c is disposed on the ohmic contact.

The data lines 171a and 171b mainly transmit a data signal and mainly extend in the perpendicular direction to cross the first gate line 121a and the second gate line 121b. The data lines 171a and 171b include a first source electrode 173a and a second source electrode 173b extended toward the first gate electrode 124a and the second gate electrode 124b and connected to each other. The first source electrode 173a and the second source electrode 173b face the first drain electrode 175a and the second drain electrode 175b with respect to the first gate electrode 124a and the second gate electrode 124b.

The first drain electrode 175a, the second drain electrode 175b, and the third drain electrode 175c include a bar-type end portion and a relatively wide end portion. The bar-type end portions of the first drain electrode 175a and the second drain electrode 175b are partly surrounded by the first source electrode 173a and the second source electrode 173b. The wide end portion of the first drain electrode 175a extends to form a U-shaped third source electrode 173c, and the third source electrode 173c faces the third drain electrode 175c. The wide end portion 177c of the third drain electrode 175c overlaps the capacitance electrode 137 to form a step-down capacitor (Cstd), and the bar-type end portion is partly surrounded by the third source electrode 173c.

The first gate electrode 124a, the first source electrode 173a, and the first drain electrode 175a form a first thin film transistor Qa together with the first semiconductor layer 154a. The second gate electrode 124b, the second source electrode 173b, and the second drain electrode 175b form a second thin film transistor Qb together with the second semiconductor layer 154b. The third gate electrode 124c, the third source electrode 173c, and the third drain electrode 175c form a third thin film transistor Qc together with the third semiconductor layer 154c.

The semiconductor stripe layer including the first semiconductor layer 154a, the second semiconductor layer 154b, and the third semiconductor layer 154c may have a substantially same flat shape as the data conductors 171a, 171b, 173a, 173b, 173c, 175a, 175b, and 175c and the ohmic contacts provided below the same except at the channel region between the source electrodes 173a, 173b, and 173c and the drain electrodes 175a, 175b, and 175c.

A portion that is not covered by the first source electrode 173a and the first drain electrode 175a, but which is exposed, is provided between the first source electrode 173a and the first drain electrode 175a on the first semiconductor layer 154a. A portion that is not covered by the second source electrode 173b and the second drain electrode 175b, but which is exposed, is provided between the second source electrode 173b and the second drain electrode 175b on the second semiconductor layer 154b. A portion that is not covered by the third source electrode 173c and the third drain electrode 175c, but which is exposed, is also provided between the third source electrode 173c and the third drain electrode 175c on the third semiconductor layer 154c.

A passivation layer 180 made of an inorganic insulator such as a silicon nitride or a silicon oxide is formed on the data conductors 171a, 171b, 173a, 173b, 173c, 175a, 175b, and 175c and the exposed first, second, and third semiconductor layers 154a, 154b, and 154c

However, the passivation layer 180 may be made of an organic insulator and its surface may be flat. The passivation layer 180 may also have a dual-layer structure of a lower inorganic layer and an upper organic layer so as to not damage the exposed semiconductor layers 154a, 154b, and 154c while maintaining the excellent insulating characteristic of the organic layer.

A plurality of contact holes 185a and 185b for exposing the first drain electrode 175a and the second drain electrode 175b are formed in the passivation layer 180.

A pixel electrode 191 including a first sub-pixel electrode 191a and a second sub-pixel electrode 191b and a shield electrode 9 are disposed on the passivation layer 180. The pixel electrode 191 may be made of a transparent conductive material such as ITO or IZO, or a reflective metal such as aluminum, silver, chromium, or an alloy thereof.

A horizontal center cutout 91, a perpendicular center cutout 92c1, lower cutouts 92a1, 92a2, and 92c2, and upper cutouts 92b1, 92b2, and 92c3 are formed on the pixel electrode 191, and the pixel electrode 191 is divided into a plurality of partitions by the cutouts 91, 92c1, 92a1, 92a2, 92c2, 92b1, 92b2, and 92c3. The cutouts 91, 92a1, 92a2, 92c2, 92b1, 92b2, and 92c3 substantially configure inversion symmetry with respect to a virtual horizontal center line for dividing the pixel electrode 191 into two portions.

In detail, the pixel electrode 191 includes oblique units including lower cutouts 92a1, 92a2, and upper cutouts 92b1, and 92b2 provided on a lower portion and a upper portion with respect to the horizontal center line of the pixel electrode 191, and connectors including center cutout 92c1, lower cutout 92c2, and upper cutout 92c3 for connecting the oblique units 92a1, 92a2, 92b1, and 92b2 with each other. The oblique units 92a1, 92a2, 92b1, and 92b2 may substantially extend to a left side of the pixel electrode 191 from a right side thereof in an oblique manner, and may extend perpendicularly with an angle of 45 degrees with respect to the gate line 121.

The lower portion of the pixel electrode 191 is divided into two partitions by the lower cutouts 92a1 and 92a2, and the upper portion is divided into two partitions by the upper cutouts 92b1 and 92b2. In detail, the lower cutouts 92a1 and 92a2, the upper cutouts 92b1 and 92b2, and the connectors 92c1, 92c2, and 92c3 may form a closed circuit, and the pixel electrode 191 may be divided into a first sub-pixel electrode 191a and a second sub-pixel electrode 191b by the lower cutouts 92a1 and 92a2, the upper cutouts 92b1 and 92b2, and the connectors 92c1, 92c2, and 92c3.

A number of pixel electrode partitions or a number of cutouts may be changed by design factors such as a size of the pixel electrode 191, a length ratio of the horizontal side and the perpendicular side of the pixel electrode 191, and a type or a characteristic of the liquid crystal layer 3.

The first sub-pixel electrode 191a and the second sub-pixel electrode 191b are electrically connected to the first drain electrode 175a and the second drain electrode 175b through the contact holes 185a and 185b, and receive a data voltage from the first drain electrode 175a and the second drain electrode 175b.

Having received the data voltage, the first sub-pixel electrode 191a and the second sub-pixel electrode 191b generate an electric field together with the common electrode 270 of the upper panel 200 to determine a direction of the liquid crystal molecules 310 between the two electrodes. The liquid crystal molecules 310 of the liquid crystal layer 3, which are aligned perpendicular to the surfaces of the two electrodes in the absence of an electric field, lie horizontally with respect to the surfaces of the two electrodes when the electric field is applied As a result, luminance of the light passing through the liquid crystal layer is changed by the degree in which the liquid crystal molecules lie.

The first sub-pixel electrode 191a and the common electrode 270 form a first liquid crystal capacitor together with the liquid crystal layer 3, and the second sub-pixel electrode 191b and the common electrode 270 form a second liquid crystal capacitor together with the liquid crystal layer 3 provided therebetween. The first and second liquid crystal capacitors maintain the applied voltage when the first and second thin film transistors (Qa and Qb) are turned off.

The first sub-pixel electrode 191a and the second sub-pixel electrode 191b overlap the storage electrode line 131 to form a first storage capacitor and a second storage capacitor, respectively. The first storage capacitor and the second storage capacitor reinforce voltage maintaining performance of the first liquid crystal capacitor and the second liquid crystal capacitor.

The capacitance electrode 137 overlaps an extension 177c of the third drain electrode 175c, which together with the gate insulating layer 140 and the semiconductor layer therebetween, form a step-down capacitor. The semiconductor layer disposed between the capacitance electrode 137 and the extension 177c of the third drain electrode 175c may be removed.

The upper panel 200 will now be described.

A light blocking member (not shown), a plurality of color filters 230, an overcoat 250, and a common electrode 270 is disposed between an insulation substrate 210 and liquid crystal layer 3. The insulation substrate 210 may be made of transparent glass or plastic. The light blocking member is also referred to as a black matrix, and prevents light leakage between the pixel electrodes 191. The light blocking member has a plurality of openings (not shown) which are opposite to the pixel electrodes 191 and have almost the same shape as the pixel electrodes 191. The light blocking member may include portions corresponding to the gate lines 121a and 121b and the data lines 171a and 171b, and portions corresponding to the thin film transistors.

The color filters 230 are disposed between the insulation substrate 210 and the overcoat 250. The color filters 230 mostly exist within the region surrounded by the light blocking member, and may extend along the columns of the pixel electrodes 191 in the vertical direction. Each color filter 230 may display one of the primary colors such as red, green, and blue. In a variation of an embodiment, the color filter 230 or the light blocking member may be provided on the lower panel 100.

The overcoat 250 is disposed between the color filter 230 and the common electrode 270. The overcoat 250 may be made of an organic material, and prevents the color filters 230 from being exposed and provides a flat surface. The overcoat 250 is optional and may be omitted.

The common electrode 270 is disposed between the overcoat 250 and an alignment layer 21. The common electrode 270 is made of a transparent conductor such as ITO or IZO. The common electrode 270 includes a set of a plurality of cutouts 71, 71a1, 71a2, 71a3, 71b1, 71b2, and 71b3.

The set of the plurality of cutouts 71, 71a1, 71a2, 71a3, 71b1, 71b2, and 71b3 include a center cutout 71, first to third lower oblique cutouts 71a1, 71a2, and 71a3, and first to third upper oblique cutouts 71b1, 71b2, and 71b3.

The cutouts 71, 71a1, 71a2, 71a3, 71b1, 71b2, and 71b3 are respectively disposed between the neighboring lower and upper cutouts 92a1, 92a2, 92b1, and 92b2 of the pixel electrode 191 or between the lower and upper cutouts 92a1, 92a2, 92b1, and 92b2 of the pixel electrode 191 and the edge of the pixel electrode 191.

The set of the plurality of cutouts 71, 71a1, 71a2, 71a3, 71b1, 71b2, and 71b3 is almost inversely symmetrical with respect to the virtual horizontal center line of the pixel electrode 191.

The cutouts of the pixel electrode 191 and the cutouts of the common electrode 270 divide the pixel electrode 191 into a plurality of sub-areas, and each sub-area has two primary edges forming an oblique angle with the primary edge of the pixel electrode 191. Liquid crystal molecules in each sub-area are mostly inclined in a direction perpendicular to the primary edges so that the liquid crystal molecules are substantially inclined in four directions.

By varying the directions in which the liquid crystal molecules are inclined (as described above), the reference viewing angle of the liquid crystal display can be increased.

Alignment layers 11 and 21 are coated on inner sides of the lower panel 100 and the upper panel 200, respectively, and they may be vertical alignment layers or photoalignment layers. Specifically, the alignment layers 11 and 21 may be provided on the pixel electrodes 191 and the common electrode 270.

Polarizers (not shown) may be formed on the outer surfaces of the lower panel 100 and the upper panel 200, respectively. Transmissive axes of the polarizers intersect each other, and one transmissive axis may be parallel to the gate lines 121. In the case of a reflective liquid crystal display, one of the two polarizers may be omitted.

A liquid crystal layer 3 is provided between the lower panel 100 and the upper panel 200. The liquid crystal layer 3 may include a liquid crystal composition including liquid crystal molecules 310 including at least one of a liquid crystal compound including an alkenyl group and a liquid crystal compound including an alkoxy group, and a first stabilizer.

The liquid crystal molecules 310 may have negative dielectric anisotropy, and they are aligned so that their long axes are almost perpendicular to the surfaces of the two panels 100 and 200.

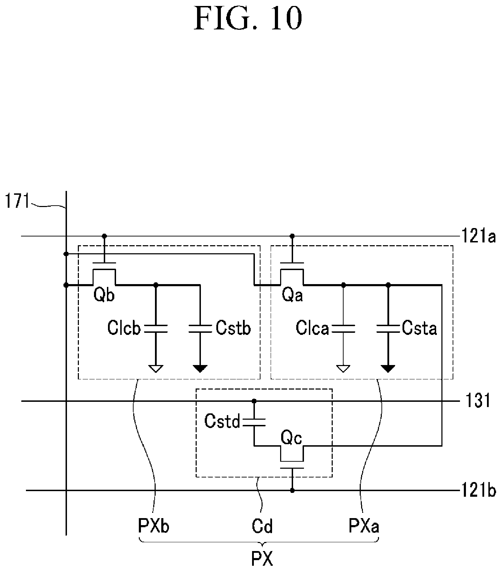

FIG. 10 is an equivalent circuit diagram of a pixel of the liquid crystal display shown in FIG. 8 and FIG. 9.

The circuit configuration and operation of the liquid crystal display shown in FIG. 8 and FIG. 9 will now be described with reference to FIG. 10.

The liquid crystal display includes signal lines including a first gate line 121a, a second gate line 121b, a storage electrode line 131, a data line 171, and a pixel PX connected thereto.

The pixel PX includes a first subpixel PXa, a second subpixel PXb, and a step-down unit Cd.

The first subpixel PXa includes a first switching element Qa, a first liquid crystal capacitor Clca, and a first storage capacitor Csta, the second subpixel PXb includes a second switching element Qb, a second liquid crystal capacitor Clcb, and a second storage capacitor Cstb, and the step-down unit Cd includes a third switching element Qc and a step-down capacitor Cstd.

The first and second switching elements Qa and Qb are three-terminal elements such as thin film transistors provided to the lower panel, and they respectively include a control terminal connected to the first gate line 121a, an input terminal connected to the data line 171, and an output terminal connected to the first and second liquid crystal capacitors Clca and Clcb and the first and second storage capacitors Csta and Cstb.

The third switching element Qc is a three-terminal element such as a thin film transistor provided to the lower panel, and it includes a control terminal connected to the second gate line 121b, an input terminal connected to the first liquid crystal capacitor Clca, and an output terminal connected to the step-down capacitor Cstd.

The first and second liquid crystal capacitors Clca and Clcb are formed when the first and second sub-pixel electrodes 191a and 191b connected to the first and second switching elements Qa and Qb overlap the common electrode of the upper panel. The first and second storage capacitors Csta and Cstb are formed when the storage electrode line 131 overlaps the first and second sub-pixel electrodes 191a and 191b.

The step-down capacitor Cstd is connected to the output terminal of the third switching element Qc and the storage electrode line 131, and the storage electrode line 131 provided to the lower panel overlaps the output terminal of the third switching element Qc with an insulator therebetween.

An operation of the liquid crystal display will now be described.

When a gate-on voltage ("Von") is applied to the first gate line 121a, the first and second thin film transistors Qa and Qb connected thereto are turned on.

The data voltage of the data line 171 is applied to the first and second sub-pixel electrodes 191a and 191b through the turned on first and second switching elements Qa and Qb. The first and second liquid crystal capacitors Clca and Clcb are charged by a voltage difference between the common voltage (Vcom) of the common electrode 270 and the voltage at the first and second sub-pixel electrodes 191a and 191b so the first liquid crystal capacitor Clca and the second liquid crystal capacitor Clcb are changed with the same voltage. A gate-off voltage ("Voff") is applied to the second gate line 121b.

When the gate-off voltage (Voff) is applied to the first gate line 121a and the gate-on voltage (Von) is simultaneously applied to the second gate line 121b, the first and second switching elements Qa and Qb connected to the first gate line 121a are turned off and the third switching element Qc is turned on. The charges of the first sub-pixel electrode 191a connected to the output terminal of the first switching element Qa, flow to the step-down capacitor Cstd to drop the voltage of the first liquid crystal capacitor Clca.

Regarding the case in which the liquid crystal display is driven in frame inversion and a data voltage having a positive (+) polarity with respect to the common voltage (Vcom) is applied to the data line 171, negative (-) charges are gathered in the step-down capacitor Cstd after the previous frame is finished. In the present frame, when the third switching element Qc is turned on, positive (+) charges of the first subpixel electrode 191a flow in the step-down capacitor Cstd through the third switching element Qc so the positive (+) charges are gathered in the step-down capacitor Cstd and the voltage of the first liquid crystal capacitor Clca drops. In the next frame, as the third switching element Qc is turned on while the first subpixel electrode 191a is charged with negative (-) charges, the negative (-) charges of the first subpixel electrode 191a flow in the step-down capacitor Cstd so the negative (-) charges are gathered in the step-down capacitor Cstd and the voltage of the first liquid crystal capacitor Clca also drops.

As described above, in an embodiment, the charged voltage of the first liquid crystal capacitor Clca can always be lower than the charged voltage of the second liquid crystal capacitor Clcb regardless of the polarity of the data voltage. Thus, the charged voltages of the first and second liquid crystal capacitors Clca and Clcb may be made different from each other, thereby improving the lateral visibility of the liquid crystal display.

In another embodiment, the first and second switching elements Qa and Qb of the first and second subpixel electrodes 191a and 191b may be applied with different data voltages obtained from one image information set through different data lines. Alternatively, the first and second switching elements Qa and Qb of the first and second subpixel electrodes 191a and 191b may be connected to different gate lines to be applied with different data voltages obtained from one image information set at different times. Alternatively, the first subpixel electrode 191a may receive the data voltage through the switching element, and the second subpixel electrode 191b may receive a relatively low voltage through capacitive coupling to the first subpixel electrode 191a. In some embodiments, the third switching element Qc, the step-down capacitor Cstd, and the like may be omitted.

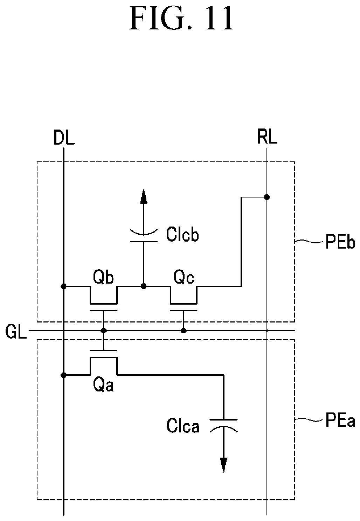

FIG. 11 shows an equivalent circuit diagram of a pixel of an embodiment of a liquid crystal display according to the present disclosure.

Referring to FIG. 11, a pixel PX of the embodiment of the liquid crystal display includes a plurality of signal lines including a gate line GL for transmitting a gate signal, a data line DL for transmitting a data signal, and a reference voltage line RL for transmitting a divided reference voltage. The pixel PX also includes a first switching element Qa, a second switching element Qb, a third switching element Qc, a first liquid crystal capacitor Clca, and a second liquid crystal capacitor Clcb which are connected to the plurality of signal lines.

The first switching element Qa and the second switching element Qb are connected to the gate line GL and the data line DL respectively, and the third switching element Qc is connected to the output terminal of the second switching element Qb and the reference voltage line RL.

The first switching element Qa and the second switching element Qb are three-terminal elements such as thin film transistors, and they respectively include a control terminal connected to the gate line GL, an input terminal connected to the data line DL, and an output terminal of the first switching element Qa connected to the first liquid crystal capacitor Clca. An output terminal of the second switching element Qb is connected to the second liquid crystal capacitor Clcb and the output terminal of the third switching element (Qc).

The third switching element Qc is a three-terminal element such as a thin film transistor, and it includes a control terminal connected to the gate line GL, an output terminal connected to the second liquid crystal capacitor Clcb, and an input terminal connected to the reference voltage line RL.

When the gate-on (Von) signal is applied to the gate line GL, the first switching element Qa, the second switching element Qb, and the third switching element Qc connected thereto are turned on. Accordingly, the data voltage applied to the data line DL is applied to the first sub-pixel electrode PEa and the second sub-pixel electrode PEb through the turned on first switching element Qa and the second switching element Qb. The data voltage applied to the first sub-pixel electrode PEa and the second sub-pixel electrode PEb may be charged with the same value. However, the voltage applied to the second sub-pixel electrode PEb is divided by the third switching element Qc connected in series to the second switching element Qb. Therefore, the voltage Vb applied to the second sub-pixel electrode PEb becomes less than the voltage Va applied to the first sub-pixel electrode (PEa).

As a result, the voltage charged in the first liquid crystal capacitor Clca becomes different from the voltage charged in the second liquid crystal capacitor Clcb so the inclining angles of the liquid crystal molecules in the first subpixel and the second subpixel become different from each other and luminance of the two subpixels become different from each other. Therefore, when the voltage charged in the first liquid crystal capacitor Clca and the voltage charged in the second liquid crystal capacitor Clcb are appropriately controlled, the image seen from the lateral side may be mostly close to the image seen from the front side and the lateral visibility may be improved.

In the embodiment of FIG. 11, having a modified visibility structure with reference to the embodiment of FIG. 2 and FIG. 3 or the embodiment of FIG. 8 and FIG. 9, the above-described liquid crystal composition included in the liquid crystal layer may be applied.

While this invention has been described in connection with what is presently considered to be practical embodiments, it is to be understood that the invention is not limited to the disclosed embodiments, but, on the contrary, is intended to cover various modifications and equivalent arrangements included within the scope of the appended claims.

## Claims

1. A liquid crystal composition comprising:
liquid crystal molecules comprising at least one of a liquid crystal compound having an alkenyl group and a liquid crystal compound having an alkoxy group; and
a first stabilizer comprising a compound having a structure represented by Formula 1-1: 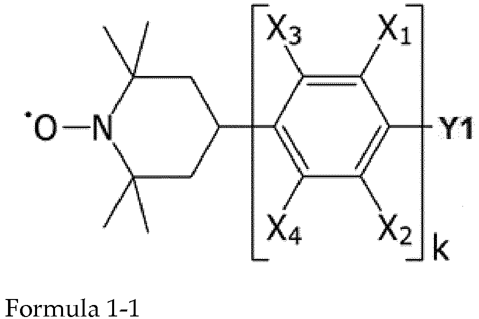 wherein X₁, X₂, X₃, and X₄ are each independently hydrogen or halogen, wherein Y1 is =O, when k is 0, or Y1 is a C1 to C10 alkoxy group, a hydroxyl group, -NHCOCH₃, or =O when k is 1.

2. A liquid crystal composition according to Claim 1, wherein the liquid crystal molecules comprise at least one of a first compound to an eleventh compound, wherein the first compound to the eleventh compound are represented by Formula 5-1 to Formula 5-11, respectively: 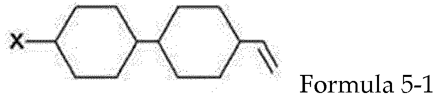 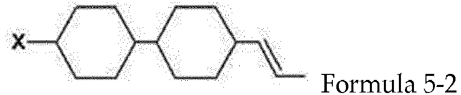 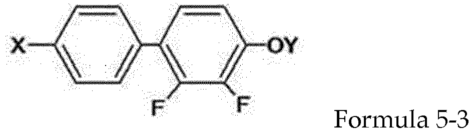 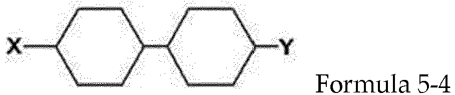 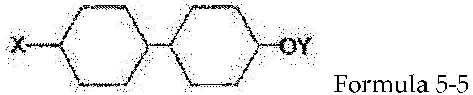 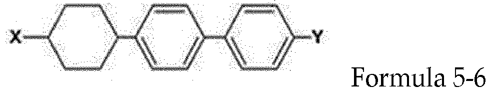 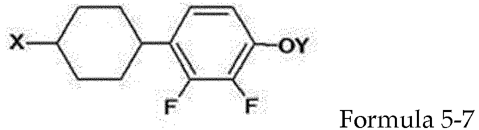 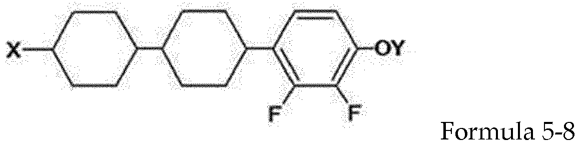 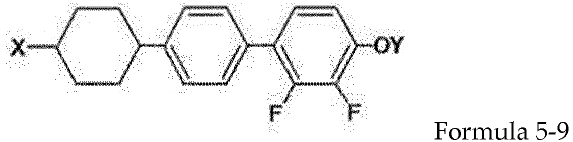 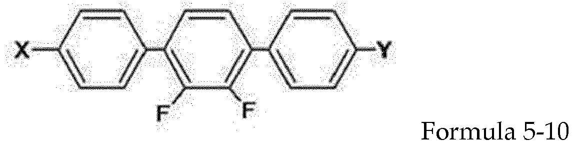 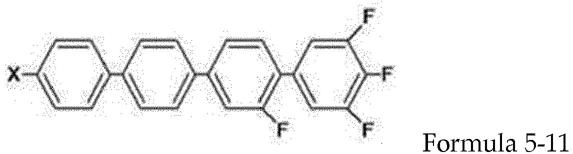 where X is an alkyl group or an alkoxy group; and Y is an alkyl group, an alkenyl group, or an alkoxy group.

3. A liquid crystal composition according to claim 2, wherein the liquid crystal molecules comprise the first compound, the second compound, the seventh compound, the eighth compound, the ninth compound, the tenth compound, and the eleventh compound.

4. A liquid crystal composition according to claim 2, wherein the liquid crystal molecules comprise the first compound, the second compound, the fourth compound, the seventh compound, the eighth compound, the ninth compound, the tenth compound, and the eleventh compound.

5. A liquid crystal composition according to claim 2, wherein the liquid crystal molecules comprise the first compound, the third compound, the fourth compound, the fifth compound, the sixth compound, the seventh compound, the eighth compound, the ninth compound, and the eleventh compound.

6. A liquid crystal composition according to claim 2, wherein the liquid crystal molecules comprise the first compound, the third compound, the sixth compound, the seventh compound, the eighth compound, the ninth compound, and the eleventh compound.

7. A liquid crystal composition according to any one of Claims 1 to 6, further comprising
a reactive mesogen.

8. A liquid crystal display comprising:
a first substrate;
a second substrate facing the first substrate; and
a liquid crystal layer disposed between the first substrate and the second substrate,
wherein the liquid crystal layer comprises liquid crystal molecules comprising at least one of a liquid crystal compound having an alkenyl group and a liquid crystal compound having an alkoxy group, and
a first stabilizer comprising a compound having a structure represented by Formula 1-1: 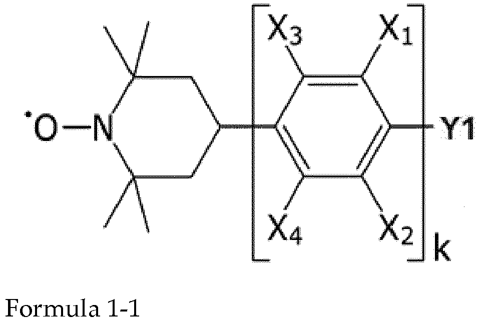 wherein X₁, X₂, X₃, and X₄ are each independently hydrogen or halogen,
wherein Y1 is =O, when k is 0, or Y1 is a C1 to C10 alkoxy group, a hydroxyl group, -NHCOCH₃, or =O when k is 1.

9. A liquid crystal display according to Claim 8, wherein the liquid crystal molecules comprise at least one of a first compound to an eleventh compound, wherein the first compound to the eleventh compound are represented by Formula 5-1 to Formula 5-11, respectively: 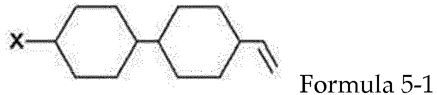 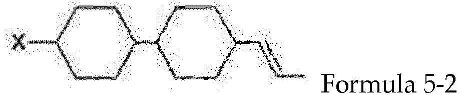 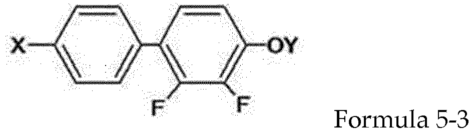 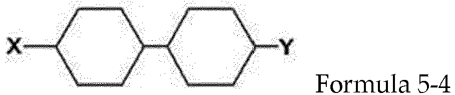 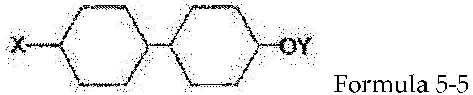 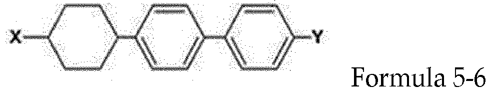 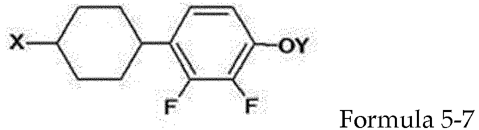 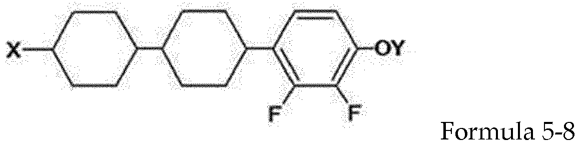 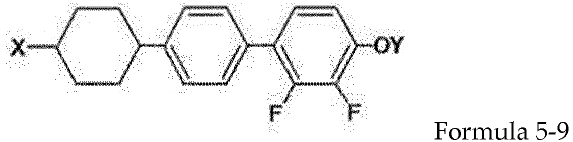 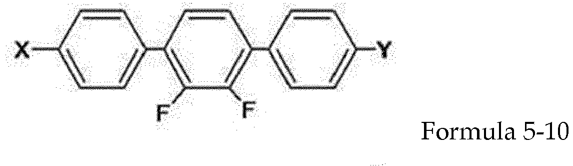 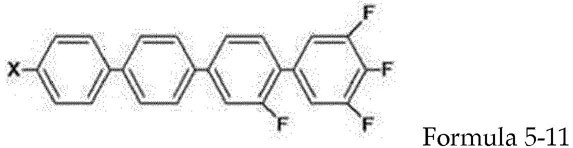 where X is an alkyl group or an alkoxy group; and Y is an alkyl group, an alkenyl group, or an alkoxy group.

10. A liquid crystal display according to claim 9, wherein the liquid crystal molecules comprise the first compound, the second compound, the seventh compound, the eighth compound, the ninth compound, the tenth compound, and the eleventh compound.

11. A liquid crystal display according to claim 9, wherein the liquid crystal molecules comprise the first compound, the second compound, the fourth compound, the seventh compound, the eighth compound, the ninth compound, the tenth compound, and the eleventh compound.

12. A liquid crystal display according to claim 9, wherein the liquid crystal molecules comprise the first compound, the third compound, the fourth compound, the fifth compound, the sixth compound, the seventh compound, the eighth compound, the ninth compound, and the eleventh compound.

13. A liquid crystal display according to claim 9, wherein the liquid crystal molecules comprise the first compound, the third compound, the sixth compound, the seventh compound, the eighth compound, the ninth compound, and the eleventh compound.

14. A liquid crystal display according to any one of claims 8 to 13, wherein the liquid crystal layer further comprises an aligning polymer.

15. A liquid crystal display according to any one of claims 8 to 14, further comprising an alignment layer disposed between at least one of the first substrate and the liquid crystal layer and the second substrate and the liquid crystal layer,
wherein the alignment layer is a photoalignment layer.

## Patentansprüche

1. Flüssigkristallzusammensetzung, umfassend:
Flüssigkristallmoleküle, umfassend mindestens eine von einer Flüssigkristallverbindung mit einem Alkenylrest und einer Flüssigkristallverbindung mit einem Alkoxyrest; und
einen ersten Stabilisator, umfassend eine Verbindung mit einer Struktur, dargestellt durch Formel 1-1: 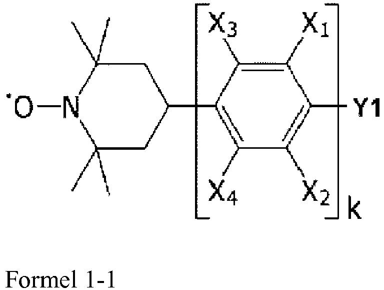 wobei X₁, X₂, X₃ und X₄ jeweils unabhängig voneinander Wasserstoff oder Halogen sind,
wobei Y1 für =O steht, wenn k=0 ist, oder Y1 für einen C₁- bis C₁₀-Alkoxyrest, eine Hydroxylgruppe, -NHCOCH₃ oder =O steht, wenn k=1 ist.

2. Flüssigkristallzusammensetzung nach Anspruch 1, wobei die Flüssigkristallmoleküle mindestens eine von einer ersten Verbindung bis einer elften Verbindung umfassen, wobei die erste Verbindung bis die elfte Verbindung jeweils durch Formel 5-1 bis Formel 5-11 dargestellt werden: 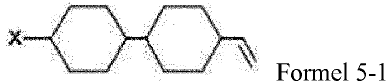 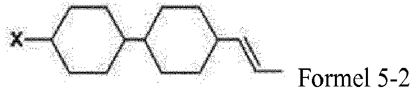 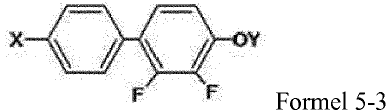 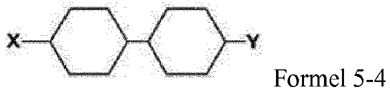 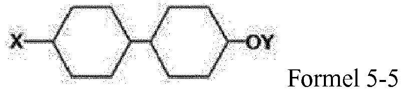 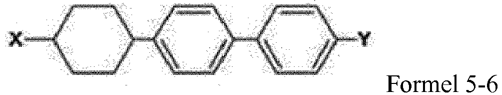 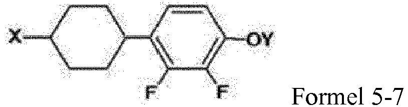 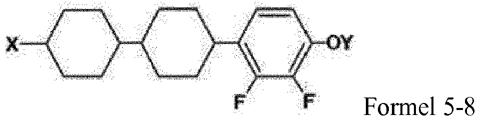 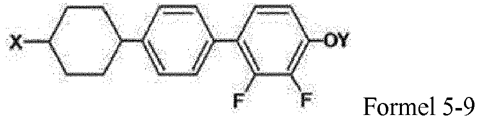 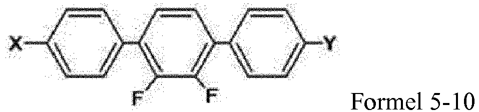 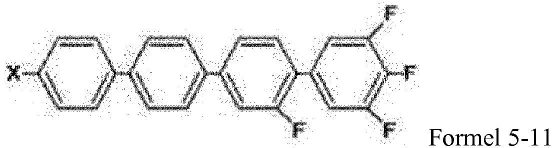 wobei X ein Alkylrest oder ein Alkoxyrest ist; und Y ein Alkylrest, ein Alkenylrest oder ein Alkoxyrest ist.

3. Flüssigkristallzusammensetzung nach Anspruch 2, wobei die Flüssigkristallmoleküle die erste Verbindung, die zweite Verbindung, die siebte Verbindung, die achte Verbindung, die neunte Verbindung, die zehnte Verbindung und die elfte Verbindung umfassen.

4. Flüssigkristallzusammensetzung nach Anspruch 2, wobei die Flüssigkristallmoleküle die erste Verbindung, die zweite Verbindung, die vierte Verbindung, die siebte Verbindung, die achte Verbindung, die neunte Verbindung, die zehnte Verbindung und die elfte Verbindung umfassen.

5. Flüssigkristallzusammensetzung nach Anspruch 2, wobei die Flüssigkristallmoleküle die erste Verbindung, die dritte Verbindung, die vierte Verbindung, die fünfte Verbindung, die sechste Verbindung, die siebte Verbindung, die achte Verbindung, die neunte Verbindung und die elfte Verbindung umfassen.

6. Flüssigkristallzusammensetzung nach Anspruch 2, wobei die Flüssigkristallmoleküle die erste Verbindung, die dritte Verbindung, die sechste Verbindung, die siebte Verbindung, die achte Verbindung, die neunte Verbindung und die elfte Verbindung umfassen.

7. Flüssigkristallzusammensetzung nach einem der Ansprüche 1 bis 6, weiterhin umfassend
ein reaktives Mesogen.

8. Flüssigkristallanzeige, umfassend:
ein erstes Substrat;
ein zweites Substrat, das dem ersten Substrat gegenüberliegt; und
eine Flüssigkristallschicht, die zwischen dem ersten Substrat und dem zweiten Substrat angeordnet ist,
wobei die Flüssigkristallschicht Flüssigkristallmoleküle umfasst, die mindestens eine von einer Flüssigkristallverbindung mit einem Alkenylrest und einer Flüssigkristallverbindung mit einem Alkoxyrest umfassen, und
einen ersten Stabilisator, der eine Verbindung mit einer Struktur umfasst, dargestellt durch Formel 1-1: 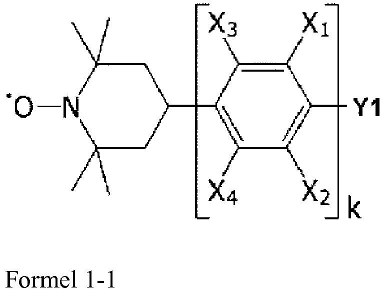 wobei X₁, X₂, X₃ und X₄ jeweils unabhängig voneinander Wasserstoff oder Halogen sind,
wobei Y1 für =O steht, wenn k=0 ist, oder Y1 für einen C₁- bis C₁₀-Alkoxyrest, eine Hydroxylgruppe, -NHCOCH₃ oder =O steht, wenn k=1 ist.

9. Flüssigkristallanzeige nach Anspruch 8, wobei die Flüssigkristallmoleküle mindestens eine von einer ersten Verbindung bis einer elften Verbindung umfassen, wobei die erste Verbindung bis die elfte Verbindung jeweils durch Formel 5-1 bis Formel 5-11 dargestellt werden: 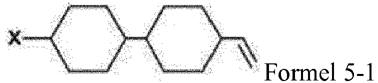 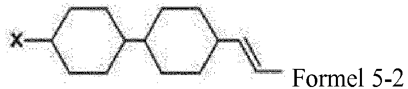 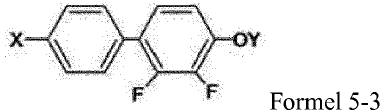 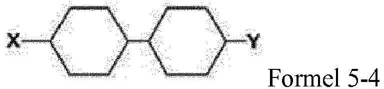 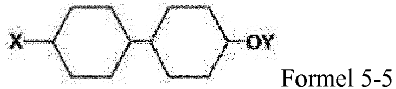 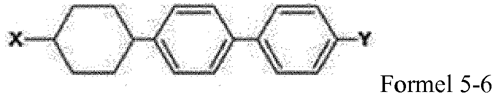 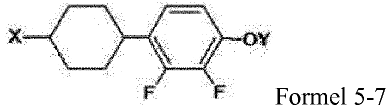 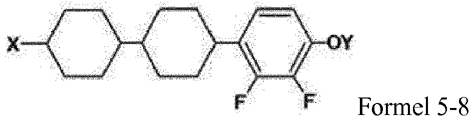 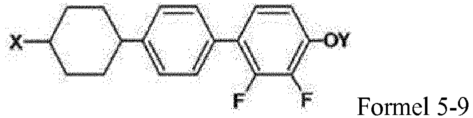 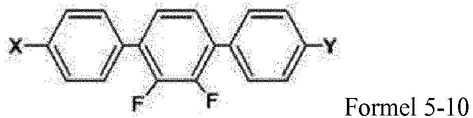 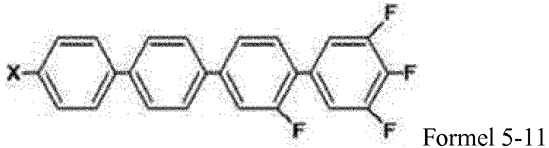 wobei X ein Alkylrest oder ein Alkoxyrest ist; und Y ein Alkylrest, ein Alkenylrest oder ein Alkoxyrest ist.

10. Flüssigkristallanzeige nach Anspruch 9, wobei die Flüssigkristallmoleküle die erste Verbindung, die zweite Verbindung, die siebte Verbindung, die achte Verbindung, die neunte Verbindung, die zehnte Verbindung und die elfte Verbindung umfassen.

11. Flüssigkristallanzeige nach Anspruch 9, wobei die Flüssigkristallmoleküle die erste Verbindung, die zweite Verbindung, die vierte Verbindung, die siebte Verbindung, die achte Verbindung, die neunte Verbindung, die zehnte Verbindung und die elfte Verbindung umfassen.

12. Flüssigkristallanzeige nach Anspruch 9, wobei die Flüssigkristallmoleküle die erste Verbindung, die dritte Verbindung, die vierte Verbindung, die fünfte Verbindung, die sechste Verbindung, die siebte Verbindung, die achte Verbindung, die neunte Verbindung und die elfte Verbindung umfassen.

13. Flüssigkristallanzeige nach Anspruch 9, wobei die Flüssigkristallmoleküle die erste Verbindung, die dritte Verbindung, die sechste Verbindung, die siebte Verbindung, die achte Verbindung, die neunte Verbindung und die elfte Verbindung umfassen.

14. Flüssigkristallanzeige nach einem der Ansprüche 8 bis 13, wobei die Flüssigkristallschicht weiterhin ein ausrichtendes Polymer umfasst.

15. Flüssigkristallanzeige nach einem der Ansprüche 8 bis 14, weiterhin umfassend eine Orientierungsschicht, das zwischen mindestens einem von dem ersten Substrat und der Flüssigkristallschicht und dem zweiten Substrat und der Flüssigkristallschicht angeordnet ist,
wobei die Orientierungsschicht eine Photoorientierungsschicht ist.

## Revendications

1. Composition de cristaux liquides comprenant :
des molécules de cristaux liquides comprenant au moins l'un d'un composé cristal liquide ayant un groupe alcényle et d'un composé cristal liquide ayant un groupe alkoxy ; et
un premier stabilisant comprenant un composé ayant une structure représentée par la formule 1-1 : 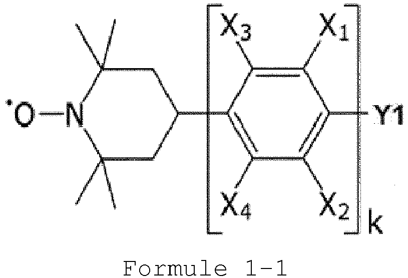 dans laquelle chacun de X₁, X₂, X₃ et X₄ est indépendamment l'hydrogène ou un halogène, dans laquelle Y1 est =O quand k vaut 0, ou Y1 est un groupe alkoxy en C1 à C10, un groupe hydroxyle, -NHCOCH₃ ou =O quand k vaut 1.

2. Composition de cristaux liquides selon la revendication 1, dans laquelle les molécules de cristaux liquides comprennent au moins l'un d'un premier composé à un onzième composé, où le premier composé au onzième composé sont représentés par la formule 5-1 à la formule 5-11, respectivement : 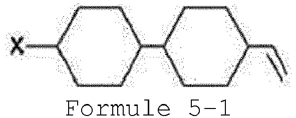 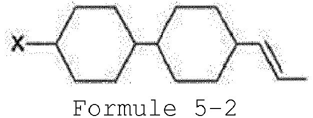 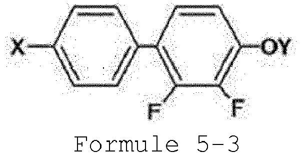 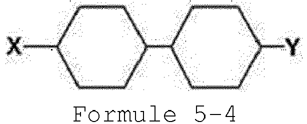 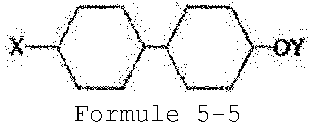 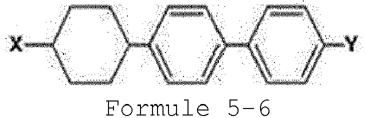 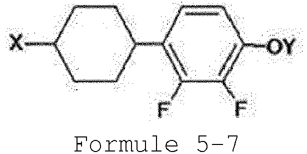 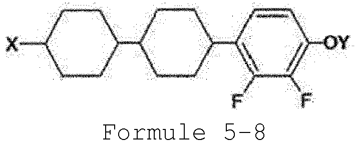 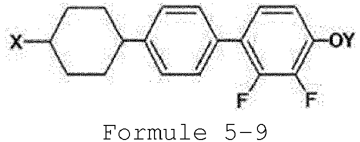 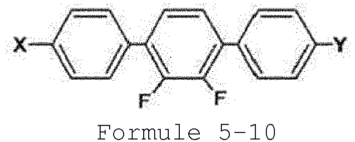 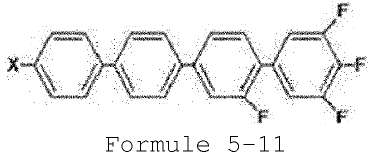 dans lesquelles X est un groupe alkyle ou un groupe alkoxy ; et Y est un groupe alkyle, un groupe alcényle, ou un groupe alkoxy.

3. Composition de cristaux liquides selon la revendication 2, dans laquelle les molécules de cristaux liquides comprennent le premier composé, le deuxième composé, le septième composé, le huitième composé, le neuvième composé, le dixième composé, et le onzième composé.

4. Composition de cristaux liquides selon la revendication 2, dans laquelle les molécules de cristaux liquides comprennent le premier composé, le deuxième composé, le quatrième composé, le septième composé, le huitième composé, le neuvième composé, le dixième composé, et le onzième composé.

5. Composition de cristaux liquides selon la revendication 2, dans laquelle les molécules de cristaux liquides comprennent le premier composé, le troisième composé, le quatrième composé, le cinquième composé, le sixième composé, le septième composé, le huitième composé, le neuvième composé, et le onzième composé.

6. Composition de cristaux liquides selon la revendication 2, dans laquelle les molécules de cristaux liquides comprennent le premier composé, le troisième composé, le sixième composé, le septième composé, le huitième composé, le neuvième composé, et le onzième composé.

7. Composition de cristaux liquides selon l'une quelconque des revendications 1 à 6, comprenant en outre un mésogène réactif.

8. Affichage à cristaux liquides comprenant :
un premier substrat ;
un deuxième substrat faisant face au premier substrat ; et
une couche de cristaux liquides disposée entre le premier substrat et le deuxième substrat,
dans lequel la couche de cristaux liquides comprend des molécules de cristaux liquides comprenant au moins l'un d'un composé cristal liquide ayant un groupe alcényle et d'un composé cristal liquide ayant un groupe alkoxy ; et
un premier stabilisant comprenant un composé ayant une structure représentée par la formule 1-1 : 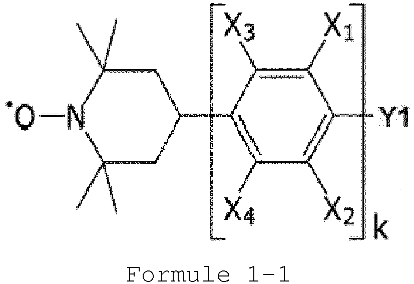 dans laquelle chacun de X₁, X₂, X₃ et X₄ est indépendamment l'hydrogène ou un halogène,
dans laquelle Y1 est =O quand k vaut 0, ou Y1 est un groupe alkoxy en C1 à C10, un groupe hydroxyle, -NHCOCH₃ ou =O quand k vaut 1.

9. Affichage à cristaux liquides selon la revendication 8, dans lequel les molécules de cristaux liquides comprennent au moins l'un d'un premier composé à un onzième composé, et où le premier composé au onzième composé sont représentés par la formule 5-1 à la formule 5-11, respectivement : 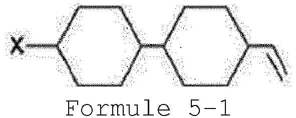 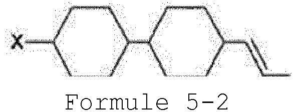 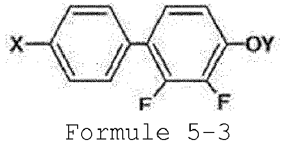 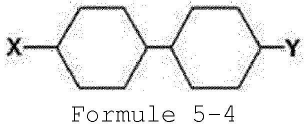 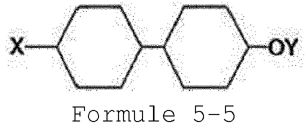 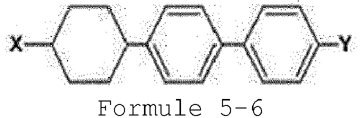 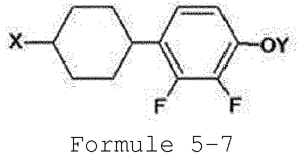 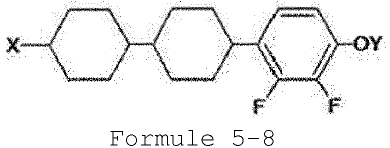 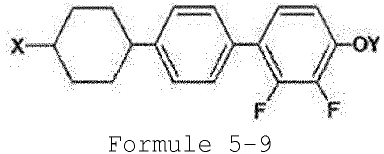 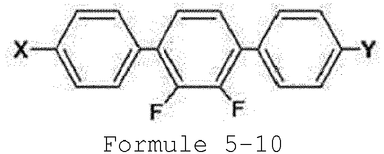 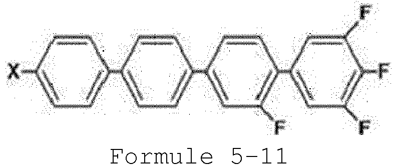 dans lesquelles X est un groupe alkyle ou un groupe alkoxy ; et Y est un groupe alkyle, un groupe alcényle, ou un groupe alkoxy.

10. Affichage à cristaux liquides selon la revendication 9, dans lequel les molécules de cristaux liquides comprennent le premier composé, le deuxième composé, le septième composé, le huitième composé, le neuvième composé, le dixième composé, et le onzième composé.

11. Affichage à cristaux liquides selon la revendication 9, dans lequel les molécules de cristaux liquides comprennent le premier composé, le deuxième composé, le quatrième composé, le septième composé, le huitième composé, le neuvième composé, le dixième composé, et le onzième composé.

12. Affichage à cristaux liquides selon la revendication 9, dans lequel les molécules de cristaux liquides comprennent le premier composé, le troisième composé, le quatrième composé, le cinquième composé, le sixième composé, le septième composé, le huitième composé, le neuvième composé, et le onzième composé.

13. Affichage à cristaux liquides selon la revendication 9, dans lequel les molécules de cristaux liquides comprennent le premier composé, le troisième composé, le sixième composé, le septième composé, le huitième composé, le neuvième composé, et le onzième composé.

14. Affichage à cristaux liquides selon l'une quelconque des revendications 8 à 13, dans lequel la couche de cristaux liquides comprend en outre un polymère d'alignement.

15. Affichage à cristaux liquides selon l'une quelconque des revendications 8 à 14, comprenant en outre une couche d'alignement disposée entre au moins l'un du premier substrat et de la couche de cristaux liquides, et du deuxième substrat et de la couche de cristaux liquides, dans lequel la couche d'alignement est une couche de photo-alignement.
